# EUROPEAN PATENT APPLICATION

(11) **EP 4 844 922 A1**
(43) Date of publication of application: **25.11.2026**
(21) Application number: 25785555.1
(22) Date of filing: 14.03.2025
(51) Int. Cl.: H01M 50/244, H01M 50/209, H01M 50/103

(54) **ENERGY STORAGE DEVICE, ENERGY STORAGE SYSTEM, AND CHARGING NETWORK**

(30) Priority: 08.04.2024 WO PCT/CN2024/086600; 08.04.2024 WO PCT/CN2024/086624; 09.07.2024 WO PCT/CN2024/104413; 09.07.2024 WO PCT/CN2024/104575; 19.07.2024 WO PCT/CN2024/106588; 12.08.2024 WO PCT/CN2024/111558; 15.08.2024 CN 202421984591 U; 15.08.2024 WO PCT/CN2024/112387; 15.08.2024 WO PCT/CN2024/112473; 15.08.2024 WO PCT/CN2024/112498; 15.08.2024 WO PCT/CN2024/112558; 24.10.2024 WO PCT/CN2024/127187
(71) Applicant: Contemporary Amperex Technology Co., Limited, Ningde, Fujian 352100 (CN)
(72) Inventor: WANG, Guotao, Ningde, Fujian 352100 (CN); HE, Shuangjiang, Ningde, Fujian 352100 (CN); LI, Zhonghong, Ningde, Fujian 352100 (CN); ZHANG, Mingliang, Ningde, Fujian 352100 (CN); WANG, Songnan, Ningde, Fujian 352100 (CN); YAO, Xiufen, Ningde, Fujian 352100 (CN); YANG, Chunxiao, Ningde, Fujian 352100 (CN)
(74) Representative: Lorenz Seidler Gossel Part. mbB
(86) International application number: PCT/CN2025/082667
(87) International publication number: WO 2025/214075

(57) **Abstract**

Embodiments of the present disclosure provide an energy storage device, an energy storage system, and a charging network. The energy storage device comprises at least one compartment body and a plurality of energy units. The size of each compartment body in the height direction thereof is smaller than size of a standard container in the height direction thereof, the size of each compartment body in the length direction thereof is consistent with the size of the standard container in the length direction thereof, and the size of each compartment body in the width direction thereof is consistent with the size of the standard container in the width direction thereof. The plurality of energy units are accommodated in the at least one compartment body. Each energy unit comprises a battery cell, the size of the battery cell in the height direction thereof is L1, the size of the battery cell in the length direction thereof is L2, the size of the battery cell in the width direction thereof is L3, wherein L1 is greater than or equal to 50 mm and less than or equal to 300 mm; L2 is greater than or equal to 200 mm and less than or equal to 1500 mm; and L3 is greater than or equal to 20 mm and less than or equal to 100 mm.

## Description

The present disclosure claims priority to patent applications No. PCT/CN2024/112473 filed on August 15, 2024, No. PCT/CN2024/112498 filed on August 15, 2024, No. PCT/CN2024/111558 filed on August 12, 2024, No. PCT/CN2024/112387 filed on August 15, 2024, No. 202421984591.6 filed on August 15, 2024, No. PCT/CN2024/112558 filed on August 15, 2024, No. PCT/CN2024/106588 filed on July 19, 2024, No. PCT/CN2024/104575 filed on July 09, 2024, No. PCT/CN2024/086624 filed on April 08, 2024, No. PCT/CN2024/104413 filed on July 09, 2024, No. PCT/CN2024/127187 filed on October 24, 2024, and No. PCT/CN2024/086600 filed on April 08, 2024, which are incorporated herein by reference in their entirety.

### TECHNICAL FIELD

The present disclosure relates to the technical field of batteries, and particularly relates to an energy storage apparatus, an energy storage system, and a charging network.

### BACKGROUND

With the rapid development of technology, electric energy has become an indispensable energy source in people work and daily life. To ensure a smooth supply of electric energy to realize normal work and daily activities, energy storage apparatuses are needed. As apparatuses for cyclically storing and releasing the electric energy, the energy storage apparatuses can store the electric energy by charging or supply the stored electric energy to electrical apparatuses by discharging. The energy storage apparatuses are widely used in the fields of industrial power supply, household power supply, temporary power supply, mobile power supply, wind power generation, solar power generation, energy storage power stations, etc.

In the development of the energy storage apparatuses, besides improving their performance, how to reduce their use cost is also an issue that cannot be ignored. Therefore, how to reduce the use cost of the energy storage apparatuses is a technical problem that continues to be relieved in energy storage technology.

### SUMMARY OF THE INVENTION

In view of the above, the embodiments of the present disclosure are expected to provide an energy storage apparatus, an energy storage system, and a charging network, aiming to reduce the use cost of the energy storage apparatus.

To achieve the objective above, in a first aspect, the embodiments of the present disclosure provide an energy storage apparatus, which includes:
at least one compartment body, the dimension of each of the compartment bodies in the height direction thereof being smaller than the dimension of a standard container in the height direction thereof, the dimension of each of the compartment bodies in the length direction thereof being consistent with the dimension of the standard container in the length direction thereof, and the dimension of each of the compartment bodies in the width direction thereof being consistent with the dimension of the standard container in the width direction thereof; and
a plurality of energy units accommodated in the at least one compartment body;
each energy unit comprising a battery cell, the dimension of the battery cell in the height direction thereof being L1, the dimension of the battery cell in the length direction thereof being L2, the dimension of the battery cell in the width direction thereof being L3, wherein L1 is greater than or equal to 50 mm and less than or equal to 300 mm; L2 is greater than or equal to 200 mm and less than or equal to 1,500 mm; and L3 is greater than or equal to 20 mm and less than or equal to 100 mm.

In the energy storage apparatus provided by the embodiments of the present disclosure, the dimension of each compartment body in the height direction thereof is smaller than that of a standard container in the height direction, that is, by reducing the dimension of a single compartment body, the total weight of a single compartment body and components in the compartment body can be reduced, which is beneficial to alleviating the problem of overweight transportation and reducing the transportation cost of the energy storage apparatus, thereby reducing the use cost of the energy storage apparatus. In addition, by setting the dimension L1 of the battery cell in the height direction thereof to be greater than or equal to 50 mm and less than or equal to 300 mm, the dimension L2 of the battery cell in the length direction thereof to be greater than or equal to 200 mm and less than or equal to 1,500 mm, and the dimension L3 of the battery cell in the width direction thereof to be greater than or equal to 20 mm and less than or equal to 100 mm, the performance of the battery cell is improved, and the space occupancy rate of the battery cell in the compartment body is also improved. This means that, provided that the transportation weight requirement is met and the dimension of the compartment body is reduced, the power capacity of the energy storage apparatus can be increased as much as possible, and the use cost of the energy storage apparatus is further reduced. In addition, the dimension of the compartment body in the length direction thereof is set to be consistent with the dimension of a standard container in the length direction, and the dimension of the compartment body in the width direction thereof is set to be consistent with the dimension of the standard container in the width direction, which is beneficial to compatibility with transportation tools and lifting appliances of existing standard containers, and reducing the transportation cost of the energy storage apparatus, thereby reducing the use cost of the energy storage compartment.

In some embodiments, 150mm≤L1≤260mm ; and/or, $250 mm \leq L 2 \leq 1200 mm ;$ and/or, $30 mm \leq L 3 \leq 90 mm .$

By setting the dimension L1 of the battery cell in the height direction thereof to be greater than or equal to 150 mm and less than or equal to 260 mm, the electrolyte inside the battery cell can rise to the top end of the battery cell even under the influence of gravity, thereby reducing the impact of excessive height of the battery cell on the lifespan of the battery cell. In addition, it also allows the battery cell to have a particular volume, thereby increasing the power capacity and effective footprint of the battery cell, further increasing the power capacity of the energy storage apparatus.

By setting the dimension L2 of the battery cell in the length direction thereof to be greater than or equal to 250 mm and less than or equal to 1,200 mm, the battery cell can have appropriate dimension and weight. In addition, it also allows the battery cell to have a particular volume, thereby increasing the power capacity and effective footprint of the battery cell, further increasing the power capacity of the energy storage apparatus.

By setting the dimension L3 of the battery cell in the width direction thereof to be greater than or equal to 30 mm and less than or equal to 90 mm, the battery cell can have appropriate dimension, which is beneficial to reducing the manufacture cost. In addition, it also allows the battery cell to have a particular volume, thereby increasing the power capacity and effective footprint of the battery cell, further increasing the power capacity of the energy storage apparatus.

In some embodiments, 0.05≤L1/L2≤1.2; and/or, $0.1 \leq L 3 / L 1 \leq 0.9 ;$ and/or, $0.025 \leq L 3 / L 2 \leq 0.36 .$

Here, by setting the ratio of the dimension L1 of the battery cell in the height direction thereof to the dimension L2 of the battery cell in the length direction thereof to be greater than or equal to 0.05 and less than or equal to 1.2, the battery cell within this dimension ratio range is appropriate, which allows the battery cell to have a particular volume, thereby increasing the power capacity and effective footprint of the battery cell, further increasing the power capacity of the energy storage apparatus.

Here, by setting the ratio of the dimension L3 of the battery cell in the width direction thereof to the dimension L1 of the battery cell in the height direction thereof to be greater than or equal to 0.1 and less than or equal to 0.9, the battery cell within this dimension ratio range is appropriate, which allows the battery cell to have a particular volume, thereby increasing the power capacity and effective footprint of the battery cell, further increasing the power capacity and energy density of the energy storage apparatus, and improving the manufacturability of the battery cell and reducing the manufacture cost.

Here, by setting the ratio of the dimension L3 of the battery cell in the width direction thereof to the dimension L2 of the battery cell in the length direction thereof to be greater than or equal to 0.025 and less than or equal to 0.36, the battery cell within this dimension ratio range is appropriate, which allows the battery cell to have a particular volume, thereby increasing the power capacity and effective footprint of the battery cell, further increasing the power capacity and energy density of the energy storage apparatus, and improving the manufacturability of the battery cell and reducing the manufacture cost.

In some embodiments, the weight of a single battery cell is s, where 3kg≤s≤30kg.

The energy units have appropriate weight, so that an appropriate number of energy units can be placed in the compartment body, and moderate energy density is achieved while transportation requirements are met.

In some embodiments, 5kg≤s≤25kg.

While further increasing the power capacity and effective footprint of the battery cell, thereby further increasing the power capacity and energy density of the energy storage apparatus, it is also possible to further improve the manufacturability of the battery cell and reduce the manufacture cost.

In some embodiments, the volume of each of the compartment bodies is V, and the total volume of the battery cells in each of the compartment bodies is V1, where 20% ≤ (V1/V) × 100% ≤ 65%.

On one hand, the volume proportion of the battery cells in the compartment body per unit volume can be increased, thus increasing the power capacity of the energy storage apparatus per unit volume; on the other hand, during the transportation of the energy storage apparatus, it is the battery cells which contribute to energy storage capacity and are difficult to produce and cannot be produced at the destination that are transported, while other functional elements such as control elements of the energy storage apparatus can be produced at a place closer to the destination without transportation or with reduced transportation; and after the compartment bodies are assembled into the energy storage apparatus, the transportation cost of the assembled energy storage apparatus can be reduced.

In some embodiments, 40%≤(V1/V)×100%≤65%.

The transportation cost of the assembled energy storage apparatus can be further reduced.

In some embodiments, the volume of each of the compartment bodies is V, and the volume of a single battery cell is V2, where0.000063≤(V2/V)≤0.00061.

On one hand, the volume proportion of the battery cells in the compartment body per unit volume can be increased, thus increasing the power capacity of the energy storage apparatus per unit volume; on the other hand, during the transportation of the energy storage apparatus, it is the battery cells which contribute to energy storage capacity and are difficult to produce and cannot be produced at the destination that are transported, while other functional elements such as control elements of the energy storage apparatus can be produced at a place closer to the destination without transportation or with reduced transportation; and after the compartment bodies are assembled into the energy storage apparatus, the transportation cost of the assembled energy storage apparatus can be reduced.

In some embodiments, the number of the battery cells in each of the compartment bodies is p, where 800≤p≤4160 .

The number of the battery cells is appropriate so that an appropriate number of battery cells can be placed in the compartment body, thereby achieving moderate energy density while meeting transportation requirements.

In some embodiments, each compartment body of the energy storage apparatus contains a plurality of battery layers arranged along the height direction of the compartment body. The plurality of battery cells in each of the battery layers are arranged in rows and columns, with the plurality of battery cells in each row arranged along the length direction of the compartment body and the plurality of battery cells in each column arranged along the width direction of the compartment body. The dimension of the compartment body in the length direction is greater than the dimension of the compartment body in the width direction. The height direction of the battery cells is parallel to the height direction of the compartment body, the length direction of the battery cells is parallel to the length direction of the compartment body, and the width direction of the battery cells is parallel to the width direction of the compartment body.

The number of the battery layers in each of the compartment bodies ranges from 3 to 14; and/or,
each of the battery layers includes 4 to 20 columns of the battery cells; and/or,
each of the battery layers includes 10 to 60 rows of the battery cells.

In this way, an appropriate number of battery cells can be placed in the compartment body, thereby improving the space utilization and achieving moderate energy density while meeting transportation requirements.

In some embodiments, each of the compartment bodies contains a plurality of battery layers arranged along the height direction of the compartment body. The plurality of battery cells in each of the battery layers are arranged in rows and columns, with the plurality of battery cells in each row arranged along the length direction of the compartment body and the plurality of battery cells in each column arranged along the width direction of the compartment body. The dimension of the compartment body in the length direction is greater than the dimension of the compartment body in the width direction. The height direction of the battery cells is parallel to the height direction of the compartment body, the width direction of the battery cells is parallel to the length direction of the compartment body, and the length direction of the battery cells is parallel to the width direction of the compartment body.

The number of the battery layers in each of the compartment bodies ranges from 3 to 14; and/or,
each of the battery layers includes 50 to 260 columns of the battery cells; and/or,
each of the battery layers includes 1 to 10 rows of the battery cells.

In this way, an appropriate number of battery cells can be placed in the compartment body, thereby improving the space utilization and achieving moderate energy density while meeting transportation requirements.

In some embodiments, the total weight of the energy storage apparatus is M, and the total weight of the battery cells in the energy storage apparatus is M1, where (M1/M) × 100% ≥ 60%.

In this way, on one hand, the weight proportion of the battery cells in the compartment body per unit volume can be increased, thus increasing the power capacity of the energy storage apparatus per unit volume; on the other hand, during the transportation of the energy storage apparatus, it is the battery cells which contribute to energy storage capacity and are difficult to produce and cannot be produced at the destination that are transported, while other structures can be produced at a place closer to the destination without transportation or with reduced transportation; and after the compartment bodies are assembled into the energy storage apparatus, the transportation cost of the assembled energy storage apparatus can be reduced.

In some embodiments, (M1/M) × 100% ≥ 80%.

Therefore, the transportation cost of the assembled energy storage apparatus can be further reduced.

In some embodiments, a plurality of battery apparatuses are arranged in each of the compartment bodies, and the battery apparatuses each include a box body and a plurality of battery cells, and the plurality of battery cells are accommodated in the box body.

The dimension of the box body in the height direction thereof is L4, where 100mm≤L4≤1000mm; and/or,
the dimension of the box body in the length direction thereof is L5, where 600mm≤L5≤2400mm; and/or,
the dimension of the box body in the width direction thereof is L6, where 500mm≤L6≤2500mm.

This allows for appropriate dimensions of the box body in the height, length, and width directions thereof, improving space utilization and achieving moderate energy density while meeting transportation requirements.

In some embodiments, 180mm≤L4≤550mm; and/or, $1000 mm \leq L 5 \leq 2100 mm ;$ and/or, $800 mm \leq L 6 \leq 2000 mm .$

This will further improve space utilization and further increase energy density while meeting transportation requirements.

In some embodiments, the volume of each of the compartment bodies is V, and the total volume of the box bodies in each of the compartment bodies is V3, where 40%≤(V3/V)×100%≤65%.

The energy density of the energy storage apparatus and the structural strength of the compartment bodies can both be taken into account of, thus improving the practicability of the compartment bodies.

In some embodiments, each of the compartment bodies contains at least one battery layer arranged along the height direction of the compartment body. The plurality of battery apparatuses in each of the battery layers are arranged in rows and columns, with the plurality of battery apparatuses in each row arranged along the length direction of the compartment body and the plurality of battery apparatuses in each column arranged along the width direction of the compartment body. The dimension of the compartment body in the length direction is greater than the dimension of the compartment body in the width direction.

The number of the battery layers in each of the compartment bodies ranges from 1 to 5; and/or,
each of the battery layers includes 2 to 4 columns of the battery apparatuses; and/or,
each of the battery layers includes 1 to 2 rows of the battery apparatuses.

In this way, an appropriate number of battery apparatuses can be placed in the compartment body, thereby improving the space utilization and achieving moderate energy density while meeting transportation requirements.

In some embodiments, the total weight of the energy storage apparatus is M, and the total weight of the battery apparatuses in the energy storage apparatus is M2, where 70%≤(M2/M)×100%≤90%.

The energy density of the energy storage apparatus and the structural strength of the compartment bodies can both be taken into account of, thus improving the practicability of the compartment bodies.

In some embodiments, a plurality of battery modules are arranged in each of the compartment bodies, the battery modules each including a plurality of the energy units;
the dimension of the battery module in the height direction of the compartment body is L7, where 50mm≤L7≤1000mm; and/or,
the dimension of the battery module in the length direction of the compartment body is L8, where 200mm≤L8≤2400mm; and/or,
the dimension of the battery module in the width direction of the compartment body is L9, where 200mm≤L9≤2500mm.

This allows for an appropriate dimension of the battery module in the width direction of the compartment body, improving space utilization and achieving moderate energy density while meeting transportation requirements.

In some embodiments, 150mm≤L7≤550mm; and/or, $1000 mm \leq L 8 \leq 2100 mm ;$ and/or, $800 mm \leq L 9 \leq 2000 mm .$

This will further improve space utilization and further increase energy density while meeting transportation requirements.

In some embodiments, each of the compartment bodies contains at least one battery layer arranged along the height direction of the compartment body. The plurality of battery modules in each of the battery layers are arranged in rows and columns, with the plurality of battery modules in each row arranged along the length direction of the compartment body and the plurality of battery modules in each column arranged along the width direction of the compartment body.

The number of battery layers in each of the compartment bodies ranges from 1 to 14; and/or,
each of the battery layers includes 2 to 20 columns of the battery modules; and/or,
each of the battery layers includes 1 to 10 rows of the battery modules.

In this way, an appropriate number of battery modules can be placed in the compartment body, thereby improving the space utilization and achieving moderate energy density while meeting transportation requirements.

In some embodiments, the energy storage apparatus includes an energy storage compartment which includes the compartment body and components arranged therein, the weight of the energy storage compartment is M, and M is less than or equal to 45 tons.

In the embodiments, by controlling the overall weight of the energy storage compartment within 45 tons, a single energy storage compartment can meet the requirements of some countries for transportation limits, and the integration of the energy storage compartment is as high as possible, reducing the workload of on-site installation; at the same time, the energy per unit area is increased and the cost input of customers is reduced.

In some embodiments, the energy of the energy storage apparatus is E, the dimension of the compartment body in the length direction thereof is a, and the dimension of the compartment body in the width direction thereof is b, where 250KW/*m²* ≤ E/(a×b) ≤ 700KW/*m²*.

The energy density of the energy storage apparatus and the mass settings of the compartment body are both taken into account of, thus improving the practicability of the energy storage apparatus and facilitating the transportation of the energy storage apparatus.

In some embodiments, 450KW/*m²* ≤E/(a×b) ≤ 600KW/*m²*.

The energy density of the energy storage apparatus and the mass settings of the compartment body can be further improved, thus facilitating the transportation of the energy storage apparatus.

In some embodiments, a plurality of compartment bodies are provided, and the plurality of compartment bodies are arranged along the height direction of the standard container, and the energy units are accommodated in all of the plurality of compartment bodies. The energy storage apparatus includes a control module, and the control module includes a master control module configured to electrically control the energy units of the plurality of compartment bodies.

In the embodiments, the control modules are arranged and can control the electric energy input or output of the energy units to realize electrical control on the energy units. In addition, the master control module is configured to electrically control the energy units of the plurality of compartment bodies, so that a single energy storage apparatus can provide or store electric energy, which can improve the convenience in use of the energy storage apparatus.

In some embodiments, the energy storage apparatus includes a thermal management module configured to manage temperatures of the energy units of the plurality of compartment bodies.

In the embodiments, the thermal management module is arranged and can manage temperatures of the energy units, thus reducing the risk of temperature runaway of the energy units.

In some embodiments, the number of energy units accommodated in each of the compartment bodies is the same; or, the plurality of energy units are connected in parallel and/or in series to form a battery cluster, and the number of battery clusters accommodated in each of the compartment bodies is the same.

In this way, the overall weight of each compartment body and the components arranged within it can be balanced.

In some embodiments, the dimension of each of the compartment bodies in the height direction is greater than or equal to one third of the dimension of a standard container in the height direction.

The dimension of the compartment body cannot be infinitely small, and when the dimension of the compartment body in the height direction is greater than or equal to one third of the dimension of a standard container in the height direction, the energy storage apparatus is high in manufacturability, high in volume energy density and more convenient to transport and mount.

In some embodiments, the standard containers are 20-foot standard containers, with the heights of 2,896 mm, 2,591 mm or 2,438 mm.

The embodiment of the present disclosure further provides an energy storage system which includes a power conversion apparatus and the above energy storage apparatus, and the power conversion apparatus is configured to electrically connect a power generation apparatus with the energy storage apparatus.

The embodiment of the present disclosure further provides the charging network which includes a charging pile and the above energy storage apparatus or the above energy storage system, and the energy storage apparatus is configured to provide electric energy for the charging pile.

### BRIEF DESCRIPTION OF THE DRAWINGS

FIG. 1 is a schematic structural diagram of a charging network provided by some embodiments of the present disclosure;
FIG. 2 is a schematic structural diagram of an energy storage system provided by some embodiments of the present disclosure;
FIG. 3 is a schematic structural diagram of an energy storage apparatus provided by some embodiments of the present disclosure;
FIG. 4 is a partial schematic structural diagram of the energy storage apparatus in FIG. 3;
FIG. 5 is a schematic structural diagram of a battery apparatus provided by some embodiments of the present disclosure;
FIG. 6 is a schematic structural diagram of a control module provided by some embodiments of the present disclosure; and
FIG. 7 is a schematic structural diagram of a battery cell provided by some embodiments of the present disclosure.

### List of reference numerals:

1000: charging network; 2000: energy storage system; 100: energy storage apparatus; 100a: energy storage compartment; 10: compartment body; 11: first compartment body; 12: second compartment body; 20: thermal management module; 30: control module; 31: main control module; 32: power distribution module; 33: master control module; 34: fire protection control module; 40: battery apparatus; 41: box body; 411: first box body; 412: second box body; 42: battery module; 43: battery cell; 200: charging pile; 300: power conversion apparatus; 3000: power generation apparatus.

### DETAILED DESCRIPTION

Unless otherwise specified, all embodiments of the present disclosure and optional embodiments may be combined with each other to form a new technical solution.

Unless otherwise specified, all the technical features of the present disclosure and optional technical features may be combined with each other to form a new technical solution.

With the development of clean energy, electric energy is used as driving power in more and more devices, leading to the rapid development of power batteries that can store a large amount of electric energy and be subjected to multiple cycles of charging and discharging, such as lithium-ion batteries. Power batteries are not only used in energy storage power systems such as hydropower, thermal power, wind power and solar power stations, but also widely used in electric vehicles such as electric bicycles, electric motorcycles, and electric vehicles, as well as aerospace and other fields.

In the embodiments of the present disclosure, energy units can be secondary batteries, which refer to energy units that active materials can be activated by charging for continuous used after discharging.

The energy unit may be a lithium ion battery, a sodium ion battery, a sodium-lithium ion battery, a lithium metal battery, a sodium metal battery, a lithium-sulfur battery, a magnesium ion battery, a nickel-hydrogen battery, a nickelcadmium battery, a lead storage battery and the like, which is not limited in the embodiments of the preset disclosure.

The energy unit generally includes an electrode assembly. Only as an example, an electrode assembly includes a positive electrode, a negative electrode, and a separator, and the separator is arranged between the negative electrode and the positive electrode. In the charging and discharging process of the energy unit, active ions (such as lithium ions) are intercalated and de-intercalated between the positive electrode and the negative electrode in a reciprocating manner. The separator is arranged between the positive electrode and the negative electrode, may play a role in preventing the positive electrode and the negative electrode from being short-circuited, and may enable active ions to pass through.

In some embodiments, the positive electrode may be a positive electrode plate, and the positive electrode plate may include a positive electrode current collector and a positive electrode active material disposed on at least one surface of the positive electrode current collector.

As an example, the positive electrode active material may include at least one of the following materials: a lithium-containing phosphate, a lithium transition metal oxide, and respective modified compounds thereof. However, there is no limitation on the materials in the present disclosure, and other traditional materials that can be used as the positive electrode active materials of the battery can also be used.

In some embodiments, the negative electrode may be a negative electrode plate, and the negative electrode plate may include a negative electrode current collector.

As an example, the negative electrode plate can include a negative electrode current collector and a negative electrode material layer disposed on at least one surface of the negative electrode current collector.

In some embodiments, the material of the positive electrode current collector may be aluminum, and the material of the negative electrode current collector may be copper.

In some implementations, the electrode assembly further includes a separator, and the separator is arranged between the positive electrode and the negative electrode.

In some implementations, the separator is a separator film. The type of the separator film is not particularly limited in the present disclosure and any well-known separator film of a porous structure having good chemical stability and mechanical stability may be selected.

As an example, the main material of the separator can be selected from at least one of glass fibers, non-woven fabric, polyethylene, polypropylene, polyvinylidene fluoride, and ceramic.

In some implementations, the separator is a solid electrolyte. The solid electrolyte is arranged between the positive electrode and the negative electrode and plays a role in transmitting ions and isolating the positive electrode and the negative electrode.

In some implementations, the energy unit further includes an electrolyte, and the electrolyte plays a role in conducting ions between the positive electrode and the negative electrode. There is no special limitation on the type of the electrolyte in the present disclosure, and it can be selected according to requirements. The electrolyte can be liquid, gel or solid.

The electrode assembly can be of a winding structure, a stacking structure, or a hybrid structure of winding and stacking.

In some implementations, the electrode assembly is of a winding structure. The positive electrode plate and the negative electrode plate are wound into the wound structure.

In some implementations, the electrode assembly is of a laminated structure.

In some implementations, the shape of the electrode assembly may be a cylinder, a flat shape, a polygon prism, or the like.

In some implementations, the electrode assembly is provided with tabs, and the tabs can conduct current out from the electrode assembly. The tab includes a positive electrode tab and a negative electrode tab.

In some implementations, the energy units can include shells. The shells can be steel shells, aluminum shells, plastic shells (such as polypropylene), composite metal shells (such as copper-aluminum composite shells) or aluminum-plastic films and the like. In some embodiments, the shells can be of a sealed structure or a non-sealed structure. As an example, when the shell is of a non-sealed structure, the shell can protect the electrode assembly. A sealing bag is also included between the shell and the electrode assembly, and the sealing bag is configured to encapsulate the electrode assembly and the electrolyte. Specifically, the sealing bag can be a bag-shaped insulating member or an aluminum-plastic film. The shells of the sealed structure are used for packaging the electrode assembly, the electrolyte and the like.

As an example, the energy units can be cylindrical energy units, prismatic energy units, soft package energy units or energy units in other shapes; the prismatic energy units include a square-shell energy unit, a blade-shaped energy unit, and a polygon-prism battery; and the polygon-prism battery is a hexagonal battery and the like, which is not particularly limited in the present disclosure.

In some embodiments, the shells include end covers and shell bodies, the shell bodies are provided with openings, and the end covers cover the openings. The shell bodies can be provided with one or more openings. One or more end covers may also be provided.

In some implementations, the shells are provided with at least one electrode terminal which is electrically connected to the tab. The electrode terminals can be directly connected to the tabs and can also be indirectly connected to the tabs through current collecting components. The electrode terminal may be arranged on the end cover, or arranged on the shell body.

The requirement of a power station for the area energy density of the energy storage apparatus is increasing, and in order to increase the power capacity, the total weight of compartment body and components in the compartment body will be correspondingly increased. The energy storage compartment is transported to a destination from a production place by land and/or sea, there is a weight limit in transportation by land and sea generally, leading a conflict between the increased energy density and the weight of the energy storage compartment.

In view of this, the embodiments of the present disclosure provide a new technical solution, which is suitable for the energy storage apparatus, an energy storage system and a charging network including the energy storage apparatus.

Energy storage apparatuses can be used for an energy storage power station, a wind power generation system, a solar power generation system, a mobile power system or a temporary power supply system and the like. Energy storage apparatuses can store electric energy as needed and output it at the appropriate time. For example, energy storage apparatuses can store electric energy during low electricity consumption periods and provide electric energy to relevant users or electrical devices during peak electricity consumption periods. The energy storage system provided by the embodiment of the present disclosure can be any electrical power system needing the energy storage apparatus.

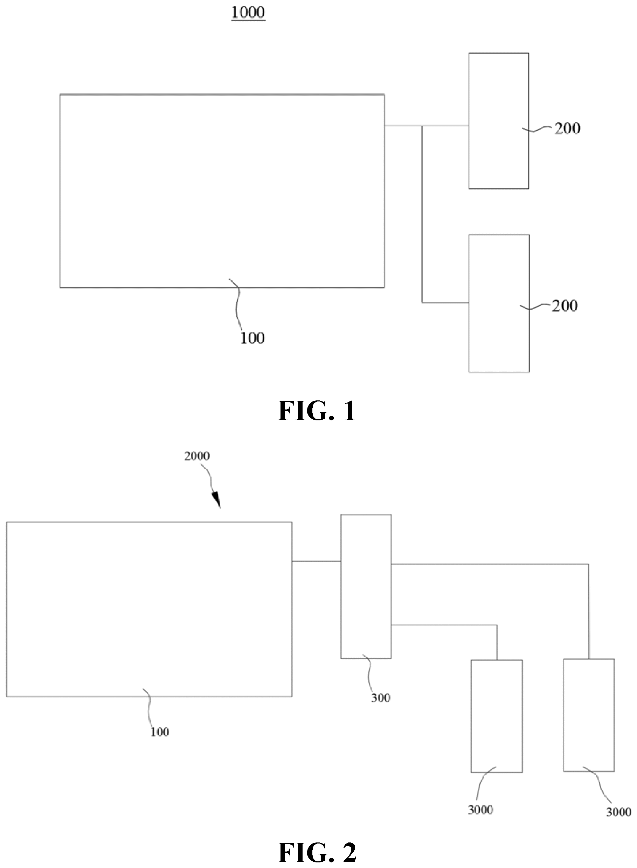

With reference to FIG. 1, FIG. 1 is a schematic structural diagram of a charging network 1000 provided by an embodiment of the present disclosure. The embodiment of the present disclosure provides the charging network 1000, and the charging network 1000 includes a charging pile 200 which is configured to charge an electrical device. The charging network 1000 can further include an energy storage apparatus 100 or an energy storage system 2000, and the energy storage apparatus 100 is electrically connected to the charging pile 200 and the energy storage apparatus 100 is configured to provide electric energy for the charging pile 200.

It is to be noted that the charging pile 200 is electrically connected to an energy unit in the energy storage apparatus 100 through a cable, and the energy unit can provide the stored electric energy therein for the charging pile 200. The charging pile 200 is provided with one or more connectors to be connected to the electrical device (such as a vehicle) so that energy can be supplemented to the electrical device. The charging network 1000 applies the energy storage apparatus 100, thus the reliability of the charging network 1000 can be effectively improved, and the deployment flexibility of the charging network 1000 can be improved.

The energy storage apparatus 100 can be located inside the charging pile 200 (such as a storage and charging all-in-one machine) or outside the charging pile 200.

In one charging network 1000, one charging pile 200 can be provided, and the energy storage apparatus 100 provides the electric energy for the one charging pile 200; alternatively, a plurality of charging piles 200 can be provided, and the energy storage apparatus 100 provides electric energy for the plurality of charging piles 200.

As an example, as shown in FIG. 1, the charging network 1000 includes one energy storage apparatus 100 and two charging piles 200, and one energy storage apparatus 100 provides electric energy for the two charging piles 200.

With reference to FIG. 2, FIG. 2 is a schematic structural diagram of the energy storage system 2000 provided by an embodiment of the present disclosure. The embodiment of the present disclosure provides the energy storage system 2000. The energy storage system 2000 includes a power conversion apparatus 300, and the power conversion apparatus 300 can be electrically connected to power generation apparatuses 3000 and the energy storage apparatus 100 so as to convert electric power provided by the power generation apparatuses 3000. The power conversion apparatus 300 performs power conversion on the electric energy provided by the power generation apparatuses 3000 and then stores in the energy storage apparatus 100.

The power conversion apparatus 300 is connected between the power generation apparatuses 3000 and the energy storage apparatus 100. The power generation apparatuses 3000 are configured to generate the electric energy, and the power generation apparatuses 3000 are also configured to store the generated electric energy in the energy storage apparatus 100 through the power conversion apparatus 300. The energy storage system 2000 applies the energy storage apparatus 100, and thus the operation reliability of the energy storage system 2000 can be effectively improved. In specific implementation, the power generation device can be particularly a solar panel, a hydroelectric power generation device, a thermal power generation device and the like. The specific type of the power generation device is not limited in the present disclosure.

As an example, as shown in FIG. 2, the energy storage system 2000 includes the energy storage apparatus 100 and the power conversion apparatus 300, the two power generation apparatuses 3000 transmit the generated electric energy to the power conversion apparatus 300 respectively, and the power conversion apparatus 300 introduces and stores the electric energy in the energy storage apparatus 100.

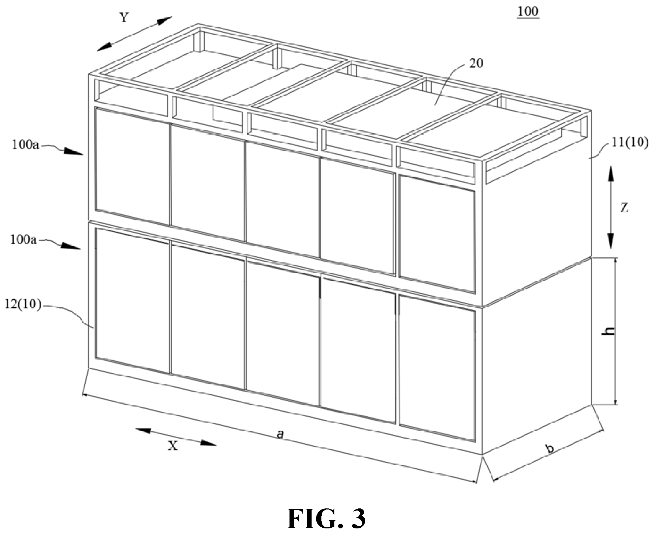

With reference to FIG. 3 to FIG. 5, some embodiments of the present disclosure provide an energy storage apparatus 100, and the energy storage apparatus 100 includes at least one compartment body 10 and a plurality of energy units. The dimension of each compartment body 10 in the height direction thereof is less than the dimension of a standard container in the height direction, the dimension of each compartment body 10 in the length direction thereof is consistent with the dimension of the standard container in the length direction, and the dimension of each compartment body 10 in the width direction thereof is consistent with the dimension of the standard container in the width direction. The plurality of energy units are accommodated in at least one compartment body 10. Each energy unit includes a battery cell 43, the dimension of the battery cell 43 in the height direction thereof is L1, the dimension of the battery cell 43 in the length direction thereof is L2, the dimension of the battery cell 43 in the width direction thereof is L3, wherein L1 is greater than or equal to 50 mm and less than or equal to 300 mm; L2 is greater than or equal to 200 mm and less than or equal to 1,500 mm; and L3 is greater than or equal to 20 mm and less than or equal to 100 mm.

The compartment bodies 10 can be cabinets or containers, cavities are formed in the compartment bodies 10, and the energy units and other components of the energy storage apparatus 100 can be accommodated in the cavities. The compartment bodies 10 can be of a hexahedron structure.

The compartment bodies 10 are generally of a cuboid structure, the length direction and the width direction of the compartment bodies 10 are both parallel to a horizontal plane, and the length direction of the compartment bodies 10 is parallel to the longest edge of the cuboid structure of the compartment bodies 10. The height direction of the compartment bodies 10 is perpendicular to the ground. By way of example, as shown in FIG. 3, the length direction of the compartment bodies 10 is represented by X, the width direction of the compartment bodies 10 is represented by Y, and the height direction of the compartment bodies 10 is represented by Z.

Here, there is no limitation on the number of the compartment bodies 10; there can be one or more compartment bodies 10.

In the embodiment where a plurality of compartment bodies 10 are provided, the plurality of compartment bodies 10 are arranged along the height direction of the compartment bodies 10, and it can be understood that the plurality compartment bodies 10 are stacked or connected along the height direction of the compartment bodies 10.

There may be one, two or more than two compartment bodies 10 in the energy storage apparatus 100, for example, the energy storage apparatus 100 includes two compartment bodies 10 which are stacked in the height direction; and for another example, the energy storage apparatus 100 includes three compartment bodies 10 which are stacked in the height direction.

Here, in an embodiment where there is one compartment body 10, each compartment body 10 refers to that compartment body 10. In an embodiment where there are a plurality of compartment bodies 10, each compartment body 10 refers to each compartment body 10 of the plurality of compartment bodies 10 meeting the corresponding conditions. That is, each compartment body 10 here refers to a single compartment body 10.

Here, the energy units can be battery cells 43 or a battery apparatus 40 formed by electrically connecting a plurality of battery cells 43.

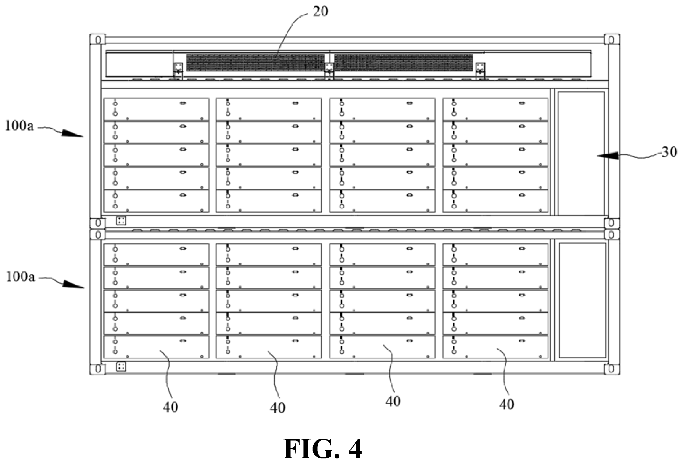

With reference to FIG. 4, the plurality of energy units can form multi-layer and/or multi-column battery apparatuses 40, and each row or each column of battery apparatuses 40 includes a plurality of battery apparatuses 40.

The battery apparatus 40 mentioned in the embodiments of the present disclosure can include one or more battery cell assemblies for providing voltage and capacity. The battery cell assembly may include a plurality of battery cells 43, and the plurality of battery cells 43 are connected in series or in parallel or in a series-parallel mode through busbar components.

In some embodiments, a battery cell assembly is generally formed by arranging a plurality of battery cells 43.

As an example, the battery cell assembly may be a battery module 42, and the battery module 42 is formed by arranging and fixing a plurality of battery cells 43 to form an independent module. As an example, the battery module 42 may be formed by bundling a plurality of battery cells 43 with a strap.

In some embodiments, the battery apparatus 40 may be a battery pack. The battery pack includes a box body 41 and one or more battery cell assemblies, the battery cell assemblies being accommodated in the box body 41.

As an example, the battery cell assembly may be a battery module 42, and the battery cell assembly may be accommodated in the box body 41 by fixing the battery module 42 in the box body 41.

As an example, the battery cell assembly can also be accommodated in the box body 41 by a mode of directly fixing the battery cells 43 in the box body 41.

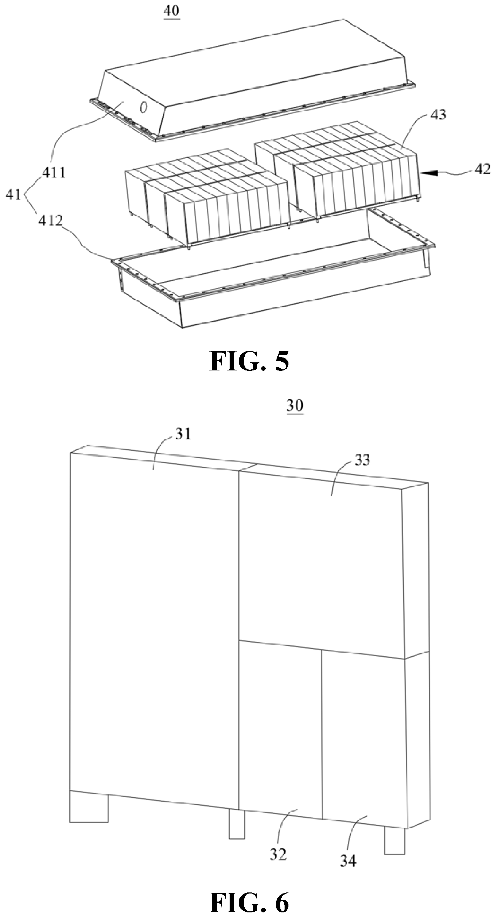

As an example, with reference to FIG. 5, the box body 41 can include a first box body 411 and a second box body 412. The first box body 411 and the second box body 412 are buckled so that an enclosure space is formed in the box body 41 to accommodate the battery cell assembly. Enclosure here means covering or closing, and may be sealed or unsealed. The first box body 411 can be a top cover or a bottom plate.

As an example, the box body 41 can include the top cover, a frame, and the bottom plate. The top cover and the bottom plate are respectively connected to the frame so that the enclosure space is formed in the box body 41 to accommodate the battery cell assembly.

By way of example, some of the compartment bodies 10 accommodate the energy units, while other compartment bodies 10 do not accommodate the energy units; or all the compartment bodies 10 accommodate the energy units.

In an embodiment where some of the compartment bodies 10 accommodate the energy units, one compartment body 10 accommodates the energy units or a plurality of compartment bodies 10 accommodate the energy units.

The plurality of energy units accommodated in the compartment bodies 10 can be the battery cells 43, the battery modules 42, the battery packs, or the battery apparatuses 40.

By way of example, in an embodiment where all the compartment bodies 10 accommodate energy units, the number of energy units accommodated in each compartment body 10 is the same. In this way, the overall weight of each compartment body 10 and the components arranged within the compartment body 10 can be balanced.

By way of example, the energy units within each compartment body 10 are arranged in the same way, which can improve assembly efficiency.

By way of example, the plurality of compartment bodies 10 are identical, which can improve the versatility of the compartment bodies 10.

By way of example, the plurality of energy units are connected in parallel and/or in series to form battery clusters, and each compartment body 10 accommodates the same number of battery clusters. In this way, the overall weight of each compartment body 10 and the components arranged within the compartment body 10 can be balanced.

For example, the energy clusters within each compartment body 10 are arranged in the same way, which can improve assembly efficiency.

Here, the plurality of energy units connected in parallel and/or in series to form a battery cluster can refer to the plurality of battery apparatuses 40 connected in parallel and/or in series to form a battery cluster.

In some embodiments, with reference to FIG. 4 and FIG. 6, a plurality of compartment bodies 10 are provided and the plurality of compartment bodies 10 are arranged along the height direction of a standard container, and energy units are accommodated in the plurality of compartment bodies 10. The energy storage apparatus 100 includes a control module 30, and the control module includes a master control module 33, and the master control module 33 is configured to electrically control the energy units in the plurality of compartment bodies 10.

Here, the energy storage apparatus 100 includes a plurality of compartment bodies 10, and the plurality of compartment bodies 10 are arranged along the height direction of a standard container to form the energy storage apparatus 100.

Here, the total height of the plurality of compartment bodies 10 stacked along the height direction of the standard container can be less than, equal to, or greater than the height of the standard container.

The master control module 33 is configured to electrically control the energy units in the plurality of compartment bodies 10. That is, a single energy storage apparatus 100 can form a complete system, meaning that a single energy storage apparatus 100 can provide or store electric energy.

The master control module 33 is configured to control the on-off action of the main control module 31 in the compartment body 10. In the embodiments, the control module 30 is arranged and the control module 30 can control the electric energy input or output of the energy units to realize electrical control on the energy units. In addition, the master control module 33 is configured to electrically control the energy units of the plurality of compartment bodies 10, so that a single energy storage apparatus 100 can provide or store electric energy, which can improve the convenience in use of the energy storage apparatus 100.

In some embodiments, with reference to FIG. 3 and FIG. 4, the energy storage apparatus 100 includes a thermal management module 20 and the thermal management module 20 is configured to manage the temperatures of energy units in the plurality of compartment bodies 10.

In the embodiments, the thermal management module 20 is arranged and the thermal management module 20 can manage the temperatures of the energy units, so that the risk of the temperature runaway of the energy units is reduced.

With reference to FIG. 3, the dimension a of the compartment body 10 in the length direction is the distance between both ends of the compartment body 10 in the length direction; the dimension b of the compartment body 10 in the width direction is the distance between both ends of the compartment body 10 in the width direction; and the dimension h of the compartment body 10 in the height direction is the distance between both ends of the compartment body 10 in the height direction. The dimensions a, b, and h are the maximum dimensions of the outer contour of the compartment body 10 in the corresponding directions. The compartment bodies 10 can include eight corner fittings and six box walls, the eight corner fittings are located at eight corners of the cuboid structure of the compartment bodies 10 and protrude out of the box walls of the compartment bodies 10, the total span of two corner fittings arranged in the height direction is equal to the heights of the compartment bodies 10, the total span of two corner fittings arranged in the length direction is equal to the lengths of the compartment bodies 10, and the total span of two corner fittings arranged in the width direction is equal to the widths of the compartment bodies 10. When calculating the dimensions of the compartment bodies 10, pipelines and cables which are connected to the compartment body 10 and located outside the compartment body 10 cannot be calculated as the dimensions of the compartment bodies 10.

The standard containers can be the dimensions of the standard containers in transportation, such as 10 feet, 20 feet, 30 feet, 40 feet or 45 feet, which meets the corresponding standard; and the length, width, and height of the standard containers have the corresponding values. The standard containers can refer to GB/T1413-2023 Series 1 Freight containers-Classification, Dimensions and Ratings.

The 10-foot can include: dimension of 2,991 mm in the length direction, with the tolerance of 0-5 mm; dimension of 2.438 mm in the width direction, with the tolerance of 0-5 mm; dimension of 2,438 mm or less than 2,438 mm in the height direction; and the tolerance of 0-5 mm.

The 20-foot can include: dimension of 6,058 mm in the length direction, with the tolerance of 0-6 mm; dimension of 2,438 mm in the width direction, with the tolerance of 0-5 mm; dimension of 2,896 mm, 2,591 mm or not greater than 2,438 mm in the height direction; and the tolerance of 0-5 mm.

The 30-foot can include: dimension of 9,125 mm in the length direction, with the tolerance of 0-10 mm; dimension of 2,438 mm in the width direction, with the tolerance of 0-5 mm; dimension of 2,896 mm, 2,591 mm or not greater than 2,438 mm in the height direction; and the tolerance of 0-5 mm.

The 40-foot can include: dimension of 12,192 mm in the length direction, with the tolerance of 0-10 mm; dimension of 2,438 mm in the width direction, with the tolerance of 0-5 mm; dimension of 2,896 mm, 2,591 mm or not greater than 2,438 mm in the height direction; and the tolerance of 0-5 mm.

The 45-foot can include: dimension of 13,716 mm in the length direction, with the tolerance of 0-10 mm; dimension of 2,438 mm in the width direction, with the tolerance of 350-5 mm; dimension of 2,591 mm or 2,896 mm in the height direction; and the tolerance of 0-5 mm.

In the embodiments of the present disclosure, for the compartment bodies 10 of various dimensions, the dimension thereof ±1%, ±2%, ±3%, ±4%, and ±5% can be regarded as the dimensions within the tolerance range.

The dimension of the compartment body 10 in the height direction thereof is set to be less than the dimension of the standard container in the height direction. By reducing the dimension of the compartment body 10, the total weight of the compartment body 10 accommodating the energy units and other components can be reduced, which is conducive to relieving the problem of overweight in transportation, and reducing the transportation cost of the energy storage apparatus 100.

In some embodiments, the standard containers are 20-foot standard containers, with the heights of 2,896 mm, 2,591 mm or 2,438 mm.

In some embodiments, the dimension of each compartment body 10 in the height direction is greater than or equal to one third of the dimension of the standard container in the height direction.

The dimensions of each compartment body 10 cannot be infinitely small, and when the dimension of each compartment body 10 in the height direction is greater than or equal to one third of the dimension of the standard container in the height direction, the energy storage apparatus 100 is high in manufacturability, high in volume energy density and more convenient to transport and mount.

By way of example, the dimension of each compartment body 10 in the height direction is equal to half the dimension of the standard container in the height direction. In this way, the height of two compartment bodies 10 stacked in the height direction is equal to the height of one standard container.

By way of example, the energy storage apparatus 100 further includes a connecting mechanism (not shown in the figure), and the connecting mechanism is configured to connect every two adjacent compartment bodies 10 in the height direction of the compartment bodies 10. The connecting mechanism includes a support member, which is positioned between two adjacent compartment bodies 10 along the height direction.

The compartment bodies 10 are connected through the connecting mechanism, so that the compartment bodies 10 can be more stably stacked.

Here, the height of the standard container minus the height of the support member, divided by 2, gives half the dimension of the standard container in the height direction.

By way of example, the length of the compartment body 10 is 6,058 mm, the width is 2,438 mm, and the height is 1,434 mm.

In some embodiments, with reference to FIG. 3 to FIG. 4, the dimension of each compartment body 10 in the length direction thereof is consistent with the dimension of the standard container in the length direction, and the dimension of each compartment body 10 in the width direction thereof is consistent with the dimension of the standard container in the width direction.

In the embodiments, the dimension of the compartment body 10 in the length direction thereof is set to be consistent with the dimension of the standard container in the length direction, and the dimension of the compartment body 10 in the width direction thereof is set to be consistent with the dimension of the standard containers in the width direction, which is conducive to matching with transportation tools and lifting appliances of existing standard containers, and reducing the transportation cost of the energy storage apparatus 100, thereby reducing the use cost of the energy storage apparatus 100.

Here, in order to adapt to the compartment body 10 with a dimension in its height direction smaller than that of a standard container in its height direction, a battery cell 43, battery module 42, and battery apparatus 40 that meet the system assembly requirements are developed.

Taking a square battery cell 43 as an example, in a vertical state, the surface formed by the length and width directions of the battery cell 43 is the bottom surface of the battery cell 43, the surface formed by the length and height directions of the battery cell 43 is the large surface of the battery cell 43, and the surface formed by the width and height directions of the battery cell 43 is the side surface of the battery cell 43.

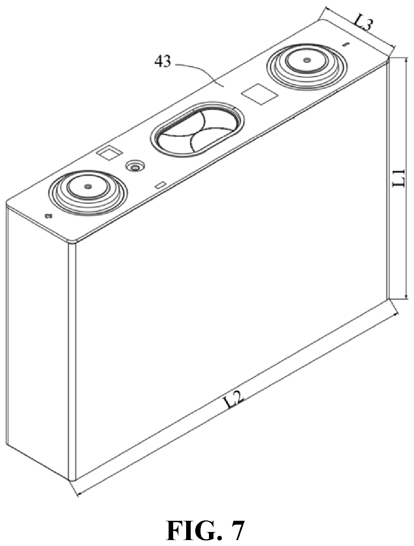

By way of example, refer to FIG. 7. The dimension L1 of the battery cell 43 in its height direction is set to be greater than or equal to 50 mm and less than or equal to 300 mm.

That is, the dimension L1 of the battery cell 43 in its height direction can be a value of any one or a value between any two of 50 mm, 75 mm, 100 mm, 125 mm, 150 mm, 200 mm, 250 mm, 260 mm, 270 mm, 280 mm, 290 mm, and 300 mm.

In a vertical position, if the height dimension of the battery cell 43 (in the direction perpendicular to the bottom surface) is greater than 300 mm, the electrolyte inside the battery cell 43 may have difficulty climbing to the top end of the battery cell 43 under the influence of gravity, thus affecting the lifespan of the battery cell 43. If the height dimension of the battery cell 43 is less than 50 mm, the power capacity of the battery cell 43 will be reduced.

It should be noted that the height dimension of the battery cell 43 refers to the dimension between the top and bottom walls of the shell, excluding the height of parts such as the post terminals arranged on the shell. Similarly, the dimension of the battery cell 43 in its length direction refers to the dimension between the two sidewalls of the shell in its length direction, and the dimension of the battery cell 43 in its width direction refers to the dimension between the two sidewalls of the shell in its width direction.

By way of example, refer to FIG. 7. The dimension L2 of the battery cell 43 in its length direction is set to be greater than or equal to 200 mm and less than or equal to 1,500 mm.

That is, the dimension L2 of the battery cell 43 along its length direction can be a value of any one or a value between any two of 200 mm, 250 mm, 300 mm, 500 mm, 600 mm, 700 mm, 800 mm, 900 mm, 1,000 mm, 1,100 mm, 1,200 mm, 1,300 mm, 1,400 mm, and 1,500 mm.

If the dimension of the battery cell 43 in its length direction is greater than 1,500 mm, this may cause the structure of the box body 41 supporting it to be too large. Due to the excessive weight of the battery cell 43 because of its excessive great length dimension, the supporting force of the entire box body 41 or module structure may be insufficient, which may lead to deformation. If the length dimension of the battery cell 43 is less than 200 mm, the power capacity of the battery cell 43 will be reduced.

As an example, refer to FIG. 7. The dimension L3 of the battery cell 43 in its width direction is set to be greater than or equal to 20 mm and less than or equal to 100 mm.

That is, the dimension L3 of the battery cell 43 in its width direction can be a value of any one or a value between any two of 20 mm, 25 mm, 30 mm, 50 mm, 60 mm, 70 mm, 80 mm, 90 mm, and 100 mm.

If the dimension of the battery cell 43 in its width direction (the dimension of the battery cell 43 in its width direction is less than the dimension of the battery cell 43 in its length direction) is greater than 100 mm, then more cores need to be added to the shell of the battery cell 43, which results in high manufacture costs. If the width dimension of the battery cell 43 is less than 20 mm, then the power capacity of the battery cell 43 will be reduced.

In addition, heat insulation pads, busbar, wire harness isolation plates and other parts may be arranged around the battery cell 43, and a particular gap should be left between the parts to facilitate installation. Thus, an excessively small dimension of the battery cell 43 will lead to an increased number of battery cells 43 for the same volume, an increased number of additional parts and spaces outside the battery cells 43, an increased total volume, thus decreased effective space occupied by the battery cells 43, and decreased space utilization and assembly efficiency.

In the energy storage apparatus 100 provided by the embodiments of the present disclosure, the dimension of the compartment body 10 in the height direction thereof is smaller than that of a standard container in the height direction, that is, by reducing the dimension of the compartment body 10, the total weight of the compartment body 10 and components in the compartment body 10 can be reduced, which is beneficial to alleviating the problem of overweight transportation and reducing the transportation cost of the energy storage apparatus 100, thereby reducing the use cost of the energy storage apparatus 100. In addition, by setting the dimension L1 of the battery cell 43 in the height direction thereof to be greater than or equal to 50 mm and less than or equal to 300 mm, the dimension L2 of the battery cell 43 in the length direction thereof to be greater than or equal to 200 mm and less than or equal to 1,500 mm, and the dimension L3 of the battery cell 43 in the width direction thereof to be greater than or equal to 20 mm and less than or equal to 100 mm, the performance of the battery cell 43 is improved, and the space occupancy rate of the battery cell 43 in the compartment body 10 is also improved. This means that, provided that the transportation weight requirement is met and the dimension of the compartment body 10 is reduced, the power capacity of the energy storage apparatus 100 can be increased as much as possible, and the use cost of the energy storage apparatus 100 is further reduced. In addition, the dimension of the compartment body 10 in the length direction thereof is set to be consistent with the dimension of a standard container in the length direction, and the dimension of the compartment body 10 in the width direction thereof is set to be consistent with the dimension of the standard container in the width direction, which is beneficial to compatibility with transportation tools and lifting appliances of existing standard containers, and reducing the transportation cost of the energy storage apparatus 100, thereby reducing the use cost of the energy storage compartment 100a.

In some embodiments, 150mm≤L1≤260mm.

That is, the dimension L1 of the battery cell 43 in its height direction can be a value of any one or a value between any two of 150 mm, 160 mm, 170 mm, 180 mm, 190 mm, 200 mm, 210 mm, 220 mm, 230 mm, 240 mm, 250 mm, and 260 mm.

By setting the dimension L1 of the battery cell 43 in the height direction thereof to be greater than or equal to 150 mm and less than or equal to 260 mm, the electrolyte inside the battery cell 43 can rise to the top end of the battery cell 43 even under the influence of gravity, thereby reducing the impact of excessive height of the battery cell 43 on the lifespan of the battery cell 43. In addition, it also allows the battery cell 43 to have a particular volume, thereby increasing the power capacity and effective footprint of the battery cell 43, further increasing the power capacity of the energy storage apparatus 100.

In some embodiments, 250mm≤L2≤1200mm.

That is, the dimension L2 of the battery cell 43 in its length direction can be a value of any one or a value between any two of 250 mm, 350 mm, 450 mm, 550 mm, 650 mm, 750 mm, 850 mm, 950 mm, 1,050 mm, 1,150 mm, and 1,200 mm.

By setting the dimension L2 of the battery cell 43 in the length direction thereof to be greater than or equal to 250 mm and less than or equal to 1,200 mm, the battery cell 43 can have appropriate dimension and weight. In addition, it also allows the battery cell 43 to have a particular volume, thereby increasing the power capacity and effective footprint of the battery cell 43, further increasing the power capacity of the energy storage apparatus 100.

In some embodiments, 30mm≤L3≤90mm.

That is, the dimension L3 of the battery cell 43 in its width direction can be a value of any one or a value between any two of 30 mm, 35 mm, 40 mm, 55 mm, 65 mm, 75 mm, 85 mm, and 90 mm.

By setting the dimension L3 of the battery cell 43 in the width direction thereof to be greater than or equal to 30 mm and less than or equal to 90 mm, the battery cell 43 can have appropriate dimension, which is beneficial to reducing the manufacture cost. In addition, it also allows the battery cell 43 to have a particular volume, thereby increasing the power capacity and effective footprint of the battery cell 43, further increasing the power capacity of the energy storage apparatus 100.

In some embodiments, 0.05≤L1/L2≤1.2.

That is, the ratio of the dimension L1 of the battery cell 43 in its height direction to the dimension L2 of the battery cell 43 in its length direction is greater than or equal to 0.05 and less than or equal to 1.2.

The ratio of the dimension L1 of the battery cell 43 in its height direction to the dimension L2 of the battery cell 43 in its length direction can be a value of any one or a value between any two of 0.05, 0.1, 0.2, 0.3, 0.4, 0.5, 0.6, 0.7, 0.8, 0.9, 1.0, 1.1, and 1.2.

Here, by setting the ratio of the dimension L1 of the battery cell 43 in the height direction thereof to the dimension L2 of the battery cell 43 in the length direction thereof to be greater than or equal to 0.05 and less than or equal to 1.2, the battery cell 43 within this dimension ratio range is appropriate, which allows the battery cell 43 to have a particular volume, thereby increasing the power capacity and effective footprint of the battery cell 43, further increasing the power capacity of the energy storage apparatus 100.

In some embodiments,0.1≤L3/L1≤0.9.

That is, the ratio of the dimension L3 of the battery cell 43 in its width direction to the dimension L1 of the battery cell 43 in its height direction is greater than or equal to 0.1 and less than or equal to 0.9.

The ratio of the dimension L3 of the battery cell 43 in its width direction to the dimension L1 of the battery cell 43 in its height direction can be a value of any one or a value between any two of 0.1, 0.2, 0.3, 0.35, 0.4, 0.5, 0.55, 0.6, 0.7, 0.8, and 0.9.

Here, by setting the ratio of the dimension L3 of the battery cell 43 in the width direction thereof to the dimension L1 of the battery cell 43 in the height direction thereof to be greater than or equal to 0.1 and less than or equal to 0.9, the battery cell 43 within this dimension ratio range is appropriate, which allows the battery cell 43 to have a particular volume, thereby increasing the power capacity and effective footprint of the battery cell 43, further increasing the power capacity and energy density of the energy storage apparatus 100, and improving the manufacturability of the battery cell 43 and reducing the manufacture cost.

In some embodiments,0.025≤L3/L2≤0.36.

That is, the ratio of the dimension L3 of the battery cell 43 in its width direction to the dimension L2 of the battery cell 43 in its length direction is greater than or equal to 0.025 and less than or equal to 0.36.

The ratio of the dimension L3 of the battery cell 43 in its width direction to the dimension L2 of the battery cell 43 in its length direction can be a value of any one or a value between any two of 0.025, 0.05, 0.1, 0.15, 0.2, 0.25, 0.3, 0.35, and 0.36.

Here, by setting the ratio of the dimension L3 of the battery cell 43 in the width direction thereof to the dimension L2 of the battery cell 43 in the length direction thereof to be greater than or equal to 0.025 and less than or equal to 0.36, the battery cell 43 within this dimension ratio range is appropriate, which allows the battery cell 43 to have a particular volume, thereby increasing the power capacity and effective footprint of the battery cell 43, further increasing the power capacity and energy density of the energy storage apparatus 100, and improving the manufacturability of the battery cell 43 and reducing the manufacture cost.

In some embodiments, with reference to FIG. 3 and FIG. 4, the energy storage apparatus 100 includes an energy storage compartment 100a, the energy storage compartment 100a includes a compartment body 10 and components arranged in the compartment body 10, the weight of the energy storage compartment 100a is M, and M is less than or equal to 45 tons.

The components arranged in the compartment body 10 are the energy units, connecting pipelines, the control module 30 or the thermal management module 20 and the like.

Here, the energy storage compartment 100a refers to a cabinet body that can be independently transported and hoisted.

By way of example, the weight of the energy storage compartment 100a can be a value of any one or a value between any two of 10 tons, 15 tons, 20 tons, 25 tons, 30 tons, 35 tons, 40 tons, and 45 tons.

During hoisting of the energy storage compartment 100a, this can facilitate hoisting by a related hoisting apparatus, thus facilitating the transfer of the energy storage compartment 100a.

The weight of the energy storage compartment 100a is controlled to be within 45 tons, thus the energy storage compartment 100a can be normally transported and hoisted in a plurality of transportation scenes such as transporting by land or sea, and the problems that the energy storage compartment 100a is overweighted, exceeding the bearing limit of roads, bridges, lifting appliances and the like during transportation, and thus the energy storage compartment 100a has to be disassembled for transportation or transferred by a special device, leading to increased transportation cost can be solved to a certain degree.

In the embodiments, by controlling the overall weight of the energy storage compartment 100a within 45 tons, a single energy storage compartment 100a can meet the requirements of some countries for transportation limits, and the integration of the energy storage compartment 100a is as high as possible, reducing the workload of on-site installation; at the same time, the energy per unit area is increased and the cost input of customers is reduced.

In some embodiments, refer to FIG. 5, the weight of a single battery cell 43 is s, where 3kg≤s≤30kg.

That is, the weight s of a single battery cell 43 is greater than or equal to 3 kg and less than or equal to 30 kg.

The weight s of a single battery cell 43 can be a value of any one or a value between any two of 3 kg, 5 kg, 6 kg, 7 kg, 8 kg, 9 kg, 10 kg, 12 kg, 13 kg, 15 kg, 16 kg, 17 kg, 20 kg, 22 kg, 23 kg, 25 kg, 26 kg, 28 kg, and 30 kg.

Here, by setting the weight s of a single battery cell 43 to be greater than or equal to 3 kg and less than or equal to 30 kg, the weight of the energy unit is appropriate, so that an appropriate number of energy units can be placed in the compartment body 10, and moderate energy density is achieved while meeting the transportation requirements.

By way of example, the weight of a single battery cell 43 is s, where 5kg≤s≤25kg.

That is, the weight s of a single battery cell 43 is greater than or equal to 5 kg and less than or equal to 25 kg.

While further increasing the power capacity and effective footprint of the battery cell 43, thereby further increasing the power capacity and energy density of the energy storage apparatus 100, it is also possible to further improve the manufacturability of the battery cell 43 and reduce the manufacture cost.

In some embodiments, the thermal management module 20 can be liquid cooling units, air conditioners, ground source cooling devices or sea liquid cooling devices.

Here, some of the compartment bodies 10 accommodate the thermal management module 20, or all of the compartment bodies 10 accommodate the thermal management module 20.

In the embodiments where some of the compartment bodies 10 accommodate the thermal management module 20, for the compartment bodies 10 without the thermal management module 20, the temperatures of the energy units can be managed through the thermal management modules 20 in the other compartment bodies 10. By way of example, the energy storage apparatus 100 includes two compartment bodies 10, namely the first compartment body 11 and the second compartment body 12, where the first compartment body 11 accommodates a thermal management module 20, the second compartment body 12 has no thermal management module 20, and the thermal management module 20 in the first compartment body 11 can manage the temperatures of the energy units in the first compartment body 11 and the second compartment body 12.

When all the compartment bodies 10 accommodate a thermal management module 20, and a plurality of energy units are arranged in both the first compartment body 11 and the second compartment body 12, the thermal management modules 20 in all the compartment bodies 10 can act together to control the temperatures of the plurality of energy units in the first compartment body 11 and the second compartment body 12; or alternatively, the thermal management module 20 in each compartment body 10 can act independently, that is, the thermal management module 20 in the first compartment body 11 controls the temperatures of the plurality of energy units in the first compartment body 11, and the thermal management module 20 in the second compartment body 12 controls the temperatures of the plurality of energy units in the second compartment body 12.

As an example, when the control modules 30 and the thermal management modules 20 in the first compartment body 11 and the second compartment body 12 can act independently, the first compartment body 11 and the components therein can be regarded as an independent energy storage apparatus 100; and the second compartment body 12 and the components therein can be regarded as an independent energy storage apparatus 100. As an example, when it is necessary for the control modules 30 and the thermal management modules 20 in the first compartment body 11 and the second compartment body 12 to control the energy units in the two compartment bodies 10 together, the first compartment body 11 and the components therein, as well as the second compartment body 12 and the components therein can be regarded as one energy storage apparatus 100 together. Definitely, in this case, only some of the energy units can be operated, for example, only the energy units in the first compartment body 11 are subjected to electrical control and temperature control, so that the energy units in the first compartment body 11 input or output electric energy, and the energy units in the second compartment body 12 do not output electric energy, which can be determined according to actual use requirements.

Due to the dimensions of the energy units, in some cases the energy units cannot fill up the compartment body 10; and by arranging the control module 30 and/or the thermal management module 20 in the compartment body 10, the space in the compartment body 10 can be fully utilized, thereby further improving the space utilization rate of the compartment body 10.

In addition, the control module 30 and/or the thermal management module 20 is mounted within the compartment body 10, and the pipelines and lines of the control module 30 and/or the thermal management module 20 have been connected on shipment, so that the mounting workload of mounting the pipelines and the lines of the control module 30 and/or the thermal management module 20 on site is reduced, and the mounting cost is reduced.

Definitely, in other embodiments, the control module 30 and/or the thermal management module 20 can also be arranged outside the compartment body 10.

By way of example, at least some of the control modules 30 are arranged outside the compartment body 10.

That is, some of the control modules 30 are arranged outside the compartment body 10, while other control modules 30 are arranged in the compartment body 10; or alternatively, all the control modules 30 are arranged outside the compartment body 10.

Here, at least some of the control modules 30 are arranged outside the compartment body 10, so that the influence of the control modules 30 on the energy units can be reduced to a certain extent, and moreover, the control modules 30 do not occupy the space in the compartment body 10. In addition, the control modules 30 are convenient to maintain and replace.

Here, the control module 30 arranged outside the compartment body 10 can be connected to at least one compartment body 10, or alternatively, the control module 30 arranged outside the compartment body 10 is separated from the compartment body 10, and the two are connected through the connecting lines or connecting pipelines.

By way of example, at least some of the thermal management modules 20 are arranged outside the compartment body 10.

That is, some of the thermal management modules 20 are arranged outside the compartment body 10, while other thermal management modules 20 are arranged in the compartment body 10; or alternatively, all the thermal management modules 20 are arranged outside the compartment body 10.

Here, at least some of the thermal management modules 20 are arranged outside the compartment body 10, so that the influence of the thermal management modules 20 on the energy units can be reduced to a certain extent, and the thermal management modules 20 do not occupy the space in the compartment body 10. In addition, the thermal management modules 20 are convenient to maintain and replace.

Here, the thermal management module 20 arranged outside the compartment body 10 can be connected to at least one compartment body 10, or alternatively, the thermal management module 20 arranged outside the compartment body 10 is separated from the compartment body 10, and the two are connected through the connecting lines or connecting pipelines.

Definitely, alternatively, part of the structure of the thermal management module 20 can be arranged outside the compartment body 10, while the other part is arranged in the compartment body 10.

By way of example, the thermal management module 20 includes a cooling fan arranged outside the compartment body 10. For another example, the thermal management module 20 includes a cooling fan and a heat exchanger arranged outside the compartment body 10.

Therefore, it facilitates heat exchange of the cooling fan, the cooling fan and the heat exchanger with the outside, thereby improving the heat exchange efficiency.

In some embodiments, the energy storage apparatus 100 may alternatively include no thermal management module 20.

In some embodiments, with reference to FIG. 4 and FIG 6, the control module 30 includes at least one of a main control module 31, a power distribution module 32, a master control module 33, and a fire protection control module 34.

The energy units are electrically connected to the main control module 31. The main control module 31 is electrically connected to the master control module 33. The main control module 31, the master control module 33, and the fire protection control module 34 are all electrically connected to the power distribution module 32.

The main control module 31 is configured to control the input and output of high-voltage electric energy of the energy units in the compartment body 10. The master control module 33 is configured to control the on-off action of the main control module 31 in the compartment body 10.

The fire protection control module 34 is configured to control a fire protection element to act when a fire occurs due to temperature imbalance in the compartment body 10; and the fire protection element can be a fire extinguisher and the like and can be arranged in the compartment body 10.

The power distribution module 32 is configured to electrically connect the main control module 31, the master control module 33, and the fire protection control module 34, so as to facilitate the turn-on of circuits of the main control module 31, the master control module 33, and the fire protection control module 34 to maintain the normal operation of the main control module 31, the master control module 33, and the fire protection control module 34.

Here, some of the compartment bodies 10 accommodate the control module 30 or all the compartment bodies 10 accommodate the control module 30.

In the embodiments where some of the compartment bodies 10 accommodate the control module 30, for the compartment bodies 10 without the control module 30, electrical control is performed on the energy units through the control modules 30 in the other compartment bodies 10. By way of example, the energy storage apparatus 100 includes two compartment bodies 10, namely the first compartment body 11 and the second compartment body 12, where the first compartment body 11 accommodates the control module 30, the second compartment body 12 accommodates the energy units, and the control module 30 in the first compartment body 11 can perform electrical control on the energy units in the second compartment body 12.

When all the compartment bodies 10 accommodate the control module 30, and a plurality of energy units are arranged in both the first compartment body 11 and the second compartment body 12, the control modules 30 in all the compartment bodies 10 can act together to perform electrical control on the plurality of energy units in the first compartment body 11 and the second compartment body 12; or alternatively, the control module 30 in each compartment body 10 can act independently, that is, the control module 30 in the first compartment body 11 performs electrical control on the plurality of energy units in the first compartment body 11, and the control module 30 in the second compartment body 12 performs electrical control on the plurality of energy units in the second compartment body 12.

Here, in the embodiments where the energy storage apparatus 100 includes a plurality of control modules 30, the plurality of control modules 30 can be the same or different.

By way of example, each compartment body 10 is provided with a control module 30, that is, the control modules 30 are in one-to-one correspondence with the compartment bodies 10, and one control module 30 correspondingly controls the input and output of the electric energy of the energy units in one compartment body 10, therefore, the control module 30 can conveniently perform electrical control on the energy units.

By way of example, some of the compartment bodies 10 are provided with a control module 30, while the other compartment bodies 10 are not provided with a control module 30, that is, one control module 30 correspondingly controls the input or output of the electric energy of the energy units in the plurality of compartment bodies 10. For example, when there are two compartment bodies 10, one compartment body 10 is provided with the control module 30, while the other one compartment body 10 is not provided with the control module 30, the control module 30 correspondingly controls the input or output of the electric energy of the energy units in the two compartment bodies 10.

Definitely, there can alternatively be a plurality of control modules 30 in one compartment body 10, the plurality of energy units are in one compartment body 10 and are connected in series to form a battery cluster, a plurality of battery clusters are connected in parallel, and one control module 30 can correspondingly control one or more battery clusters.

Therefore, the space in the compartment body 10 which accommodates the thermal management module 20 can be increased, and the influence of the thermal management module 20 on the volume for accommodating the energy units can be reduced, that is, the compartment body 10 has enough space to accommodate the energy units and the thermal management module 20. In addition, the thermal management module 20 with higher refrigerating capacity can be placed to improve the thermal management capacity.

In order to facilitate rapid field mounting for the customers, the control module 30 and the thermal management module 20 are integrated in the compartment body 10, and the compartment body 10 can be connected to the PCS and the EMS after being stacked on site, thus the workload of assembling on site is reduced, the assembling efficiency is improved, and the use is convenient for the customers.

The PCS (Power Conversion System) can control the charging and discharging processes of a storage battery, perform AC-DC conversion and directly supply power to an AC load in case of no power grid. The PCS includes a DC/AC bidirectional converter, a control unit and the like. A PCS controller receives a background control instruction through communication and controls the converter to charge or discharge the battery according to the symbol and the magnitude of the power instruction, so as to adjust active power and reactive power of the power grid. The PCS controller communicates with a BMS through a CAN interface to acquire status information of a battery pack, thus archiving protective charging and discharging of the battery.

The EMS (Energy Management System) is a set of software and hardware for monitoring, controlling, analyzing and optimizing an energy system. The EMS realizes efficient management and optimal configuration of energy by monitoring and intelligently controlling various processes of energy production, distribution and consumption in real time.

In some embodiments, the total weight of the energy storage apparatus 100 is M, and the total weight of the battery cells 43 in the energy storage apparatus 100 is M1, where (M1/M)×100%≥60%.

By way of example, (M1/M)×100%can be a value of any one or a value between any two of 60%, 61%, 62%, 63%, 64%, 65%, 66%, 67%, 68%, 69%, 70%, 71%, 72%, 73%, 74%, 75%, 76%, 77%, 78%, 79%, 80%, and 90%.

Therefore, on one hand, the weight proportion of the battery cells 43 in the energy storage apparatus 100 per unit volume can be increased, thereby increasing the power capacity of the energy storage apparatus 100 per unit volume; on the other hand, during the transportation of the energy storage apparatus 100, it is the battery cells 43 which contribute to energy storage capacity and are difficult to produce and cannot be produced at the destination that are transported, while other structures can be produced at a place closer to the destination without transportation or reduced transportation; and after the compartment bodies 10 are assembled into the energy storage apparatus 100, the transportation cost of the assembled energy storage apparatus 100 is reduced.

In some embodiments, (M1/M)×100%≥80%.

By way of example, (M1/M)×100% can be a value of any one or a value between any two of 80%, 81%, 82%, 83%, 84%, 85%, 86%, 87%, 88%, 89% or 90%.

Therefore, the transportation cost of the assembled energy storage apparatus 100 can be further reduced.

In some embodiments, the volume of each compartment body 10 is V, and the total volume of the battery cells 43 in each compartment body 10 is V1, where 20%≤(V1/V)×100%≤65%.

Here, in an embodiment where there is one compartment body 10, "the volume of each compartment body 10 is V, and the total volume of the battery cells 43 in each compartment body 10 is V1" means that the volume of the compartment body 10 is V, and the total volume of the battery cells 43 in the compartment body 10 is V1.

In an embodiment where there are a plurality of compartment bodies 10, "the volume of each compartment body 10 is V, and the total volume of the battery cells 43 in each compartment body 10 is V1" means that the volume of each compartment body 10 of the plurality of compartment bodies 10 is V, and the total volume of the battery cells 43 in each compartment body 10 of the plurality of compartment bodies 10 is V1.

The battery cell 43 includes a shell, and the volume of the battery cell 43 is the volume of the shell. For example, the battery cell 43 is a square-shell battery cell 43, and the product of the length, width and height of the square-shell battery cell 43 is the product of the length, width and height of the shell.

In an embodiment where the battery cell 43 further includes an electrode terminal, the electrode terminal is arranged in the shell and partially protrudes out of the shell. The electrode terminal is electrically connected to an electrode assembly, and the part of the electrode terminal protruding out of the shell is not counted as the volume of the battery cell 43.

(V1/V)×100% can be a value of any one or a value between any two of 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 55%, 60% or 65%.

On one hand, the volume proportion of the battery cells 43 in the compartment body 10 per unit volume can be increased, thus increasing the power capacity of the energy storage apparatus 100 per unit volume; on the other hand, during the transportation of the energy storage apparatus 100, it is the battery cells 43 which contribute to energy storage capacity and are difficult to produce and cannot be produced at the destination that are transported, while other functional elements such as control elements of the energy storage apparatus 100 can be produced at a place closer to the destination without transportation or with reduced transportation; and after the compartment bodies 10 are assembled into the energy storage apparatus 100, the transportation cost of the assembled energy storage apparatus 100 can be reduced.

In some embodiments, 40%≤(V1/V)×100%≤65%.

The transportation cost of the assembled energy storage apparatus 100 can be further reduced.

In some embodiments, the volume of each compartment body 10 is V, and the volume of a single battery cell 43 is V1, where0.000063≤(V2/V)≤0.00061.

(V2/V)×100% can be a value of any one or a value between any two of 0.000063, 0.00007, 0.00008, 0.00009, 0.0001, 0.0002, 0.0003, 0.0004, 0.0005, 0.0006, and 0.00061.

On one hand, the volume proportion of the battery cells 43 in the compartment body 10 per unit volume can be increased, thus increasing the power capacity of the energy storage apparatus 100 per unit volume; on the other hand, during the transportation of the energy storage apparatus 100, it is the battery cells 43 which contribute to energy storage capacity and are difficult to produce and cannot be produced at the destination that are transported, while other functional elements such as control elements of the energy storage apparatus 100 can be produced at a place closer to the destination without transportation or with reduced transportation; and after the compartment bodies 10 are assembled into the energy storage apparatus 100, the transportation cost of the assembled energy storage apparatus 100 can be reduced.

In some embodiments, the number of the battery cells 43 in each compartment body 10 is p, where 800≤p≤4160. This means that the number of battery cells 43 in a single compartment body 10 is P.

The number of battery cells 43 can be a value of any one or a value between any two of 800, 900, 1,000, 1,200, 1,500, 1,800, 2,000, 2,200, 2,500, 2,700, 2,800, 3,000, 3,100, 3,500, 3,700, 3,800, 3,900, 4,000, 4,100, 4,120, and 4,160.

Here, by setting the number p of battery cells 43 to be greater than or equal to 800 and less than or equal to 4,160, the number of battery cells 43 is appropriate, so that an appropriate number of battery cells 43 can be placed in the compartment body 10, and the energy density is moderate while meeting the transportation requirements.

In some embodiments, each compartment body 10 contains a plurality of battery layers arranged along the height direction of the compartment body 10. The plurality of battery cells 43 in each battery layer are arranged in rows and columns. The plurality of battery cells 43 in each row are arranged along the length direction of the compartment body 10, and the plurality of battery cells 43 in each column are arranged along the width direction of the compartment body 10. The dimension of the compartment body 10 in the length direction is greater than the dimension of the compartment body 10 in the width direction. The height direction of the battery cells 43 is parallel to the height direction of the compartment body 10, the length direction of the battery cells 43 is parallel to the length direction of the compartment body 10, and the width direction of the battery cells 43 is parallel to the width direction of the compartment body 10.

Here, the plurality of battery cells 43 of each battery layer are arranged in rows and columns. That is, the battery cells 43 can be directly arranged in the compartment body 10. For example, the plurality of battery cells 43 are divided into a plurality of battery layers, and the plurality of battery cells 43 of each battery layer are arranged in rows and columns.

By way of example, the height direction of the battery cells 43 may be parallel to the height direction of the compartment body 10, the width direction of the battery cells 43 may be parallel to the length direction of the compartment body 10, and the length direction of the battery cells 43 may be parallel to the width direction of the compartment body 10.

Definitely, the height direction of the battery cells 43 may be parallel to the height direction of the compartment body 10, the length direction of the battery cells 43 may be parallel to the length direction of the compartment body 10, and the width direction of the battery cells 43 may be parallel to the width direction of the compartment body 10.

By way of example, each compartment body 10 has 3 to 14 battery layers.

The number of battery layers can be 3, 4, 5, 6, 7, 8, 9, 10, 11, 12, 13, 14, etc.

By way of example, each battery layer includes 4 to 20 columns of battery cells 43.

The number of columns of the battery cells 43 included in each battery layer can be a value of any one or a value between any two of 4, 5, 8, 9, 10, 15, 18, and 20.

By way of example, each battery layer includes 10 to 60 rows of the battery cells 43.

The number of rows of the battery cells 43 included in each battery layer can be a value of any one or a value between any two of 10, 15, 18, 20, 22, 25, 28, 30, 32, 35, 40, 45, 48, 50, 52, 55, 58, and 60.

Here, by having 3 to 14 battery layers in each compartment body 10, with each battery layer including 4 to 20 columns of battery cells 43 and each battery layer including 10 to 60 rows of battery cells 43, an appropriate number of battery cells 43 can be placed in the compartment body 10, improving space utilization and achieving moderate energy density while meeting transportation requirements.

In some embodiments, each compartment body 10 contains a plurality of battery layers arranged along the height direction of the compartment body 10. The plurality of battery cells 43 in each battery layer are arranged in rows and columns, with the plurality of battery cells 43 in each row arranged along the length direction of the compartment body 10 and the plurality of battery cells 43 in each column arranged along the width direction of the compartment body 10. The dimension of the compartment body 10 in the length direction is greater than the dimension of the compartment body 10 in the width direction. The height direction of the battery cells 43 is parallel to the height direction of the compartment body 10, the width direction of the battery cells 43 is parallel to the length direction of the compartment body 10, and the length direction of the battery cells 43 is parallel to the width direction of the compartment body 10.

By way of example, each battery layer includes 50 to 260 columns of battery cells 43.

The number of columns of the battery cells 43 included in each battery layer can be a value of any one or a value between any two of 50, 80, 100, 120, 130, 150, 180, 200, 230, 250, and 260.

By way of example, each battery layer includes 1 to 10 rows of the battery cells 43.

The number of rows of the battery cells 43 included in each battery layer can be a value of any one or a value between any two of 1, 3, 5, 6, 8, and 10.

Here, by having 3 to 14 battery layers in each compartment body 10, with each battery layer including 50 to 260 columns of battery cells 43 and each battery layer including 1 to 10 rows of battery cells 43, an appropriate number of battery cells 43 can be placed in the compartment body 10, improving space utilization and achieving moderate energy density while meeting transportation requirements.

In some embodiments, with reference to FIG. 4 and FIG. 5, a plurality of battery apparatuses 40 are arranged in each compartment body 10, the battery apparatuses 40 each include a box body 41 and a plurality of battery cells 43, and the plurality of battery cells 43 are accommodated in the box body 41.

Here, an enclosure space is formed in the box body 41 to accommodate the battery cells 43.

By way of example, the dimension of the box body 41 in the height direction of the box body 41 is L4, where 100mm≤L4≤1000mm.

The dimension L4 of the box body 41 in the height direction of the box body 41 can be a value of any one or a value between any two of 100 mm, 150 mm, 200 mm, 220 mm, 250 mm, 300 mm, 400 mm, 550 mm, 650 mm, 750 mm, 800 mm, 950 mm, and 1,000 mm.

By setting the dimension L4 of the box body 41 in the height direction of the box body 41 to be greater than or equal to 100 mm and less than or equal to 1,000 mm, the dimension of the box body 41 in the height direction of the box body 41 can be appropriate, improving space utilization and achieving moderate energy density while meeting transportation requirements.

By way of example, the dimension of the box body 41 in the height direction of the box body 41 is L4, where 180mm≤L4≤550mm.

The dimension L4 of the box body 41 in the height direction of the box body 41 can be a value of any one or a value between any two of 180 mm, 200 mm, 260 mm, 320 mm, 380 mm, 420 mm, 460 mm, 480 mm, 500 mm, 520 mm, and 550 mm.

This will further improve space utilization and further increase energy density while meeting transportation requirements.

By way of example, the dimension of the box body 41 in the length direction of the box body 41 is L5, where 600mm≤L5≤2400mm.

The dimension L5 of the box body 41 in the length direction of the box body 41 can be a value of any one or a value between any two of 600 mm, 650 mm, 750 mm, 800 mm, 950 mm, 1,050 mm, 1,000 mm, 1,200 mm, 1,500 mm, 1,650 mm, 1,700 mm, 1,800 mm, 1,900 mm, 2,000 mm, 2,200 mm, and 2,400 mm.

By setting the dimension L5 of the box body 41 in the length direction of the box body 41 to be greater than or equal to 600 mm and less than or equal to 2,400 mm, the dimension of the box body 41 in the length direction of the box body 41 can be appropriate, improving space utilization and achieving moderate energy density while meeting transportation requirements.

By way of example, the dimension of the box body 41 in the length direction of the box body 41 is L5, where 1000mm≤L5≤2100mm.

The dimension L5 of the box body 41 in the length direction of the box body 41 can be a value of any one or a value between any two of 1,000 mm, 1,100 mm, 1,300 mm, 1,400 mm, 1,750 mm, 1,850 mm, 1,950 mm, 2,050 mm, and 2,100 mm.

This will further improve space utilization and further increase energy density while meeting transportation requirements.

By way of example, the dimension of the box body 41 in the width direction of the box body 41 is L6, where 500mm≤L6≤2500mm.

The dimension L6 of the box body 41 in the width direction of the box body 41 can be a value of any one or a value between any two of 500 mm, 550 mm, 600 mm, 700 mm, 800 mm, 950 mm, 1,050 mm, 1,000 mm, 1,200 mm, 1,500 mm, 1,650 mm, 1,700 mm, 1,800 mm, 1,900 mm, 2,000 mm, 2,100 mm, 2,300 mm, and 2,500 mm.

By setting the dimension L6 of the box body 41 in the width direction of the box body 41 to be greater than or equal to 500 mm and less than or equal to 2,500 mm, the dimension of the box body 41 in the width direction of the box body 41 can be appropriate, improving space utilization and achieving moderate energy density while meeting transportation requirements.

By way of example, the dimension of the box body 41 in the width direction of the box body 41 is L6, where 800mm≤L6≤2000mm.

The dimension L6 of the box body 41 in the width direction of the box body 41 can be a value of any one or a value between any two of 800 mm, 900 mm, 1,000 mm, 1,100 mm, 1,300 mm, 1,400 mm, 1,750 mm, 1,850 mm, 1,900 mm, and 2,000 mm.

This will further improve space utilization and further increase energy density while meeting transportation requirements.

In some embodiments, the volume of each compartment body 10 is V, and the total volume of the box bodies 41 in each compartment body 10 is V3, where 40%≤(V3/V)×100%≤65%.

By way of example, the box body 41 is of a cuboid structure, and the volume of the box body 41 is equal to the product of the length, width and height of the box body 41.

(V3/V)×100% can be a value of any one or a value between any two of 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, and 65%.

When(V3/V)×100%≥40%, the volume proportion of the box bodies 41 in the compartment body 10 per unit volume can be improved, and the energy density of the energy storage apparatus 100 is improved; and when (V3/V)×100%≤65%, the compartment body 10 can have structural members with enough volume to maintain the structural strength of the compartment body 10. Therefore, when 40%≤(V3/V)×100%≤65%, the energy density of the energy storage apparatus 100 and the structural strength of the compartment body 10 can both be taken into account of, and the practicability of the compartment body 10 is improved.

In some embodiments, with reference to FIG. 4, each compartment body 10 contains at least one battery layer arranged along the height direction of the compartment body 10. The plurality of battery apparatuses 40 in each battery layer are arranged in rows and columns, with the plurality of battery apparatuses 40 in each row arranged along the length direction of the compartment body 10 and the plurality of battery apparatuses 40 in each column arranged along the width direction of the compartment body 10. The dimension of the compartment body 10 in the length direction is greater than the dimension of the compartment body 10 in the width direction.

Here, the plurality of battery apparatuses 40 in each battery layer are arranged in rows and columns. That is, the battery cells 43 are assembled into the battery apparatuses 40 which are then arranged in the compartment body 10. By way of example, the plurality of battery apparatuses 40 are divided into a plurality of battery layers, and the plurality of battery apparatuses 40 in each battery layer are arranged in rows and columns.

By way of example, each compartment body 10 has 1 to 5 battery layers.

The number of battery layers can be 1, 2, 3, 4, 5, etc.

By way of example, each battery layer includes 2 to 4 columns of battery apparatuses 40.

Each battery layer can include 2, 3, 4, or another number of columns of battery apparatuses 40.

By way of example, each battery layer includes 1 to 2 rows of battery apparatuses 40.

Each battery layer may contain one or two rows of battery apparatuses 40.

Here, by having 1 to 5 battery layers in each compartment body 10, with each battery layer including 2 to 4 columns of battery apparatuses 40 and each battery layer including 1 to 2 rows of battery apparatuses 40, an appropriate number of battery apparatuses 40 can be placed in the compartment body 10, improving space utilization and achieving moderate energy density while meeting transportation requirements.

In some embodiments, the total weight of the energy storage apparatus 100 is M, and the total weight of the battery apparatuses 40 in the energy storage apparatus 100 is M2, where 70%≤(M2/M)×100%≤90%.

Here, the total weight of the energy storage apparatus 100 refers to the sum of the total weight of all the compartment bodies 10 and the total weight of the components within all the compartment bodies 10.

(M2/M)×100% can be a value of any one or a value between any two of 70%, 71%, 72%, 73%, 74%, 75%, 76%, 77%, 78%, 79%, 80%, 81%, 82%, 83%, 84%, 85%, 86%, 87%, 88%, 89%, and 90%.

When (M2/M)×100%≥70% , the weight proportion of the battery apparatuses 40 in the energy storage apparatus 100 per unit volume can be improved, and the energy density of the energy storage apparatus 100 is improved; and when (M2/M)×100%≤90%, the structural strength of the compartment body 10 can be maintained. Therefore, when 70%≤(M2/M)×100%≤90%, the energy density of the energy storage apparatus 100 and the structural strength of the compartment body 10 can both be taken into account of, and the practicability of the compartment body 10 is improved.

In some embodiments, a plurality of battery modules 42 are arranged in each compartment body 10 and the battery modules 42 each include a plurality of energy units.

The battery module 42 is composed of a plurality of battery cells 43 arranged and fixed to form an independent module. As an example, the battery module 42 may be formed by bundling a plurality of battery cells 43 with a strap.

By way of example, the dimension of the battery module 42 in the height direction of the compartment body 10 is L7, where 50mm≤L7≤1000mm.

The dimension L7 of the battery module 42 in the height direction of the compartment body 10 can be a value of any one or a value between any two of 50 mm, 75 mm, 100 mm, 150 mm, 200 mm, 220 mm, 250 mm, 300 mm, 400 mm, 550 mm, 650 mm, 750 mm, 800 mm, 950 mm, and 1,000 mm.

By setting the dimension L7 of the battery module 42 in the height direction of the compartment body 10 to be greater than or equal to 50 mm and less than or equal to 1,000 mm, the dimension of the battery module 42 in the height direction of the compartment body 10 can be appropriate, improving space utilization and achieving moderate energy density while meeting transportation requirements.

By way of example, 150≤L7≤550mm.

The dimension L7 of the battery module 42 in the height direction of the compartment body 10 can be a value of any one or a value between any two of 150 mm, 200 mm, 260 mm, 320 mm, 380 mm, 420 mm, 460 mm, 480 mm, 500 mm, 520 mm, and 550 mm.

This will further improve space utilization and further increase energy density while meeting transportation requirements.

By way of example, the dimension of the battery module 42 in the length direction of the compartment body 10 is L8, where 200mm≤L8≤2400mm.

The dimension L8 of the battery module 42 in the length direction of the compartment body 10 can be a value of any one or a value between any two of 200 mm, 250 mm, 300 mm, 350 mm, 450 mm, 500 mm, 550 mm, 600 mm, 650 mm, 750 mm, 800 mm, 950 mm, 1,050 mm, 1,000 mm, 1,200 mm, 1,500 mm, 1,650 mm, 1,700 mm, 1,800 mm, 1,900 mm, 2,000 mm, 2,200 mm, and 2,400 mm.

By setting the dimension L8 of the battery module 42 in the length direction of the compartment body 10 to be greater than or equal to 200 mm and less than or equal to 2,400 mm, the dimension of the battery module 42 in the length direction of the compartment body 10 can be appropriate, improving space utilization and achieving moderate energy density while meeting transportation requirements.

By way of example, 1000mm≤L8≤2100mm.

The dimension L8 of the battery module 42 in the length direction of the compartment body 10 can be a value of any one or a value between any two of 1,000 mm, 1,100 mm, 1,300 mm, 1,400 mm, 1,750 mm, 1,850 mm, 1,950 mm, 2,050 mm, and 2,100 mm.

This will further improve space utilization and further increase energy density while meeting transportation requirements.

By way of example, the dimension of the battery module 42 in the width direction of the compartment body 10 is L9, where 200mm≤L9≤2500mm.

The dimension L9 of the battery module 42 in the width direction of the compartment body 10 can be a value of any one or a value between any two of 200 mm, 250 mm, 300 mm, 350 mm, 450 mm, 500 mm, 550 mm, 600 mm, 700 mm, 800 mm, 950 mm, 1,050 mm, 1,000 mm, 1,200 mm, 1,500 mm, 1,650 mm, 1,700 mm, 1,800 mm, 1,900 mm, 2,000 mm, 2,100 mm, 2,300 mm, and 2,500 mm.

By setting the dimension L9 of the battery module 42 in the width direction of the compartment body 10 to be greater than or equal to 200 mm and less than or equal to 2,500 mm, the dimension of the battery module 42 in the width direction of the compartment body 10 can be appropriate, improving space utilization and achieving moderate energy density while meeting transportation requirements.

By way of example, 800mm≤L9≤2000mm.

The dimension L9 of the battery module 42 in the width direction of the compartment body 10 can be a value of any one or a value between any two of 800 mm, 900 mm, 1,000 mm, 1,100 mm, 1,300 mm, 1,400 mm, 1,750 mm, 1,850 mm, 1,900 mm, and 2,000 mm.

This will further improve space utilization and further increase energy density while meeting transportation requirements.

In some embodiments, each compartment body 10 contains at least one battery layer arranged along the height direction of the compartment body 10. The plurality of battery modules 42 in each battery layer are arranged in rows and columns, with the plurality of battery modules 42 in each row arranged along the length direction of the compartment body 10 and the plurality of battery modules 42 in each column arranged along the width direction of the compartment body 10.

Here, the plurality of battery modules 42 in each battery layer are arranged in rows and columns. That is, the battery cells 43 are assembled into the battery modules 42 which are then arranged in the compartment body 10. By way of example, the plurality of battery modules 42 are divided into a plurality of battery layers, and the plurality of battery modules 42 in each battery layer are arranged in rows and columns.

By way of example, each compartment body 10 has 1 to 14 battery layers.

The number of the battery layers may be 1, 2, 3, 4, 5, 6, 7, 8, 9, 10, 11, 12, 13, 14, etc.

By way of example, each battery layer includes 2 to 20 columns of battery modules 42.

The number of columns of the battery modules 42 included in each battery layer can be a value of any one or a value between any two of 1, 2, 4, 5, 8, 9, 10, 15, 18, and 20.

By way of example, each battery layer includes 1 to 10 rows of battery modules 42.

The number of rows of the battery modules 42 included in each battery layer can be 1, 2, 3, 4, 5, 6, 7, 8, 9, 10, etc.

Here, by having 1 to 14 battery layers in each compartment body 10, with each battery layer including 2 to 20 columns of battery modules 42 and each battery layer including 1 to 10 rows of battery modules 42, an appropriate number of battery modules 42 can be placed in the compartment body 10, improving space utilization and achieving moderate energy density while meeting transportation requirements.

In some embodiments, with reference to FIG. 3, the energy of the energy storage apparatus 100 is E, the dimension of the compartment body 10 in the length direction of the compartment body 10 is a, and the dimension of the compartment body 10 in the width direction of the compartment body 10 is b, where 250KW/*m²* ≤ E/(a×b) ≤ 700KW/*m²*.

E/(a×b) can be a value of any one or a value between any two of 250 KW/m², 300 KW/m², 350 KW/m², 400 KW/m², 450 KW/m², 460 KW/m², 470 KW/m², 480 KW/m², 485 KW/m², 490 KW/m², 495 KW/m², 500 KW/m², 510 KW/m², 550 KW/m², 600 KW/m², 650 KW/m², 700 KW/m².

The energy E can be obtained from a nameplate of the energy storage apparatus 100.

When E/(a×b)≥250KW/m², the energy storage apparatus 100 can have large energy density, and thus the practicability of the energy storage apparatus 100 is improved; and when E/(a×b)≤700KW/m², the risk that the compartment body 10 with large mass crushes and damages other compartment bodies 10 can be reduced, and transportation of the compartment bodies 10 is facilitated. Therefore, when 250KW/*m²* ≤E/(a×b) ≤ 700KW/*m²*, the energy density of the energy storage apparatus 100 and the mass settings of the compartment bodies 10 are both taken into account of, thereby improving the practicability of the energy storage apparatus 100 as well as facilitating the transportation of the energy storage apparatus 100.

In some embodiments, 450KW/*m²* ≤ E/(a×b) ≤ 600KW/*m²*.

E/(a×b) can be a value of any one or a value between any two of 450 KW/m², 455 KW/m², 460 KW/m², 465 KW/m², 470 KW/m², 475 KW/m², 480 KW/m², 485 KW/m², 490 KW/m², 495 KW/m², 500 KW/m², 505 KW/m², 510 KW/m², 515 KW/m², 520 KW/m², 530 KW/m², 540 KW/m², 550 KW/m², 600 KW/m².

By way of example, E/(a×b) = 490KW/*m²*. The energy density of the energy storage apparatus 100 and the mass settings of the compartment bodies 10 can be further improved, and transportation of the energy storage apparatus 100 is facilitated.

By way of example, in addition to its own structure, the compartment body 10 also has necessary doors or sealing plates, wiring harness and pipeline connection interfaces, etc. In addition to necessary structural components, wiring harnesses, and fire protection equipment in a compartment body 10 in the form of an independent energy compartment, the main space inside the compartment body 10 is used entirely for storing battery cells 43, battery modules 42 composed of battery cells 43, or battery apparatuses 40. Integrated energy storage products, in addition to the above components, also include main control boxes, master control boxes, water-cooled units, fire protection control, power distribution control and other systems. These systems are located on the top, bottom, left, and right sides inside the compartment body 10.

The foregoing are only preferred embodiments of the present disclosure and are not intended to limit the present disclosure, which is subject to various changes and variations for those skilled in the art. Any modifications, equivalent replacements, improvements, etc., made within the spirit and principles of this disclosure are included in the scope of protection of this disclosure.

## Claims

1. An energy storage apparatus, comprising:
at least one compartment body, the dimension of each of the compartment bodies in the height direction thereof being smaller than the dimension of a standard container in the height direction thereof, the dimension of each of the compartment bodies in the length direction thereof being consistent with the dimension of the standard container in the length direction thereof, and the dimension of each of the compartment bodies in the width direction thereof being consistent with the dimension of the standard container in the width direction thereof; and
a plurality of energy units accommodated in the at least one compartment body;
wherein the energy unit comprises a battery cell, the dimension of the battery cell in the height direction thereof being L1, the dimension of the battery cell in the length direction thereof being L2, the dimension of the battery cell in the width direction thereof being L3, wherein L1 is greater than or equal to 50 mm and less than or equal to 300 mm; L2 is greater than or equal to 200 mm and less than or equal to 1500 mm; and L3 is greater than or equal to 20 mm and less than or equal to 100 mm.

2. The energy storage apparatus according to claim 1, wherein 150 mm ≤ L1 ≤ 260 mm; and/or $250 mm \leq L 2 \leq 1200 mm ;$ and/or $30 mm \leq L 3 \leq 90 mm .$

3. The energy storage apparatus according to claim 1 or 2, wherein 0.05 ≤ L1/L2 ≤ 1.2; and/or $0.1 \leq L 3 / L 1 \leq 0.9 ;$ and/or $0.025 \leq L 3 / L 2 \leq 0.36 .$

4. The energy storage apparatus according to any one of claims 1 to 3, wherein the weight of a single battery cell is s, wherein 3 kg ≤ s ≤ 30 kg.

5. The energy storage apparatus according to claim 4, wherein 5 kg ≤ s ≤ 25 kg.

6. The energy storage apparatus according to any one of claims 1 to 5, wherein the volume of each of the compartment bodies is V, and a total volume of the battery cells in each of the compartment bodies is V1, wherein 20% ≤ (V1/V)X100% ≤ 65%.

7. The energy storage apparatus according to claim 6, wherein 40% ≤ (V1/V)X100% ≤ 65%.

8. The energy storage apparatus according to any one of claims 1 to 7, wherein the volume of each of the compartment bodies is V, and the volume of a single battery cell is V2, wherein 0.000063 ≤ (V2/V) ≤ 0.00061.

9. The energy storage apparatus according to any one of claims 1 to 8, wherein the number of the battery cells in each of the compartment bodies is p, wherein 800 ≤ p ≤ 4160.

10. The energy storage apparatus according to any one of claims 1 to 9, wherein each of the compartment bodies accommodates a plurality of battery layers arranged along the height direction of the compartment body, the plurality of battery cells in each of the battery layers are arranged in rows and columns, with the plurality of battery cells in each row arranged along the length direction of the compartment body and the plurality of battery cells in each column arranged along the width direction of the compartment body, the dimension of the compartment body in the length direction is greater than the dimension of the compartment body in the width direction, the height direction of the battery cells is parallel to the height direction of the compartment body, the length direction of the battery cells is parallel to the length direction of the compartment body, and the width direction of the battery cells is parallel to the width direction of the compartment body;
the number of the battery layers in each of the compartment bodies ranges from 3 to 14; and/or
each of the battery layers comprises 4 to 20 columns of the battery cells; and/or
each of the battery layers comprises 10 to 60 rows of the battery cells.

11. The energy storage apparatus according to any one of claims 1 to 9, wherein each of the compartment bodies accommodates a plurality of battery layers arranged along the height direction of the compartment body, the plurality of battery cells in each of the battery layers are arranged in rows and columns, with the plurality of battery cells in each row arranged along the length direction of the compartment body and the plurality of battery cells in each column arranged along the width direction of the compartment body, the dimension of the compartment body in the length direction is greater than the dimension of the compartment body in the width direction, the height direction of the battery cells is parallel to the height direction of the compartment body, the width direction of the battery cells is parallel to the length direction of the compartment body, and the length direction of the battery cells is parallel to the width direction of the compartment body;
the number of the battery layers in each of the compartment bodies ranges from 3 to 14; and/or
each of the battery layers comprises 50 to 260 columns of the battery cells; and/or
each of the battery layers comprises 1 to 10 rows of the battery cells.

12. The energy storage apparatus according to any one of claims 1 to 11, wherein the total weight of the energy storage apparatus is M, and the total weight of the battery cells in the energy storage apparatus is M1, wherein (M1/M)X100% ≥ 60%.

13. The energy storage apparatus according to claim 12, wherein (M1/M)X100% ≥ 80%.

14. The energy storage apparatus according to any one of claims 1 to 9, wherein a plurality of battery apparatuses are arranged in each of the compartment bodies, and the battery apparatuses each comprise a box body and the plurality of battery cells, and the plurality of battery cells are accommodated in the box body;
the dimension of the box body in the height direction thereof is L4, wherein 100 mm ≤ L4 ≤ 1000 mm; and/or
the dimension of the box body in the length direction thereof is L5, wherein 600 mm ≤ L5 ≤ 2400 mm; and/or
the dimension of the box body in the width direction thereof is L6, wherein 500 mm ≤ L6 ≤ 2500 mm.

15. The energy storage apparatus according to claim 14, wherein 180 mm ≤ L4 ≤ 550 mm; and/or $1000 mm \leq L 5 \leq 2100 mm ;$ and/or $800 mm \leq L 6 \leq 2000 mm .$

16. The energy storage apparatus according to claim 14 or 15, wherein the volume of each of the compartment bodies is V, and a total volume of the box bodies in each of the compartment bodies is V3, wherein 40% ≤ (V3/V)X100% ≤ 65%.

17. The energy storage apparatus according to any one of claims 14 to 16, wherein each of the compartment bodies accommodates at least one battery layer arranged along the height direction of the compartment body, the plurality of battery apparatuses in each of the battery layers are arranged in rows and columns, with the plurality of battery apparatuses in each row arranged along the length direction of the compartment body and the plurality of battery apparatuses in each column arranged along the width direction of the compartment body, and the dimension of the compartment body in the length direction is greater than the dimension of the compartment body in the width direction;
the number of the battery layers in each of the compartment bodies ranges from 1 to 5; and/or
each of the battery layers comprises 2 to 4 columns of the battery apparatuses; and/or
each of the battery layers comprises 1 to 2 rows of the battery apparatuses.

18. The energy storage apparatus according to any one of claims 14 to 17, wherein the total weight of the energy storage apparatus is M, and the total weight of the battery apparatuses in the energy storage apparatus is M2, wherein 70% ≤ (M2/M)X100% ≤ 90%.

19. The energy storage apparatus according to any one of claims 1 to 9, wherein a plurality of battery modules are arranged in each of the compartment bodies, and the battery modules each comprise a plurality of the energy units;
the dimension of the battery module in the height direction of the compartment body is L7, wherein 50 mm ≤ L7 ≤ 1000 mm; and/or
the dimension of the battery module in the length direction of the compartment body is L8, wherein 200 mm ≤ L8 ≤ 2400 mm; and/or
the dimension of the battery module in the width direction of the compartment body is L9, wherein 200 mm ≤ L9 ≤ 2500 mm.

20. The energy storage apparatus according to claim 19, wherein 150 mm ≤ L7 ≤ 550 mm; and/or $1000 mm \leq L 8 \leq 2100 mm ;$ and/or $800 mm \leq L 9 \leq 2000 mm .$

21. The energy storage apparatus according to claim 19 or 20, wherein each of the compartment bodies accommodates at least one battery layer arranged along the height direction of the compartment body, the plurality of battery modules in each of the battery layers are arranged in rows and columns, with the plurality of battery modules in each row arranged along the length direction of the compartment body and the plurality of battery modules in each column arranged along the width direction of the compartment body;
the number of the battery layers in each of the compartment bodies ranges from 1 to 14; and/or
each of the battery layers comprises 2 to 20 columns of the battery modules; and/or
each of the battery layers comprises 1 to 10 rows of the battery modules.

22. The energy storage apparatus according to any one of claims 1 to 21, comprising an energy storage compartment which comprises the compartment body and components arranged in the compartment body, the weight of the energy storage compartment being M, and M being less than or equal to 45 tons.

23. The energy storage apparatus according to any one of claims 1 to 22, wherein the energy of the energy storage apparatus is E, the dimension of the compartment body in the length direction thereof is a, and the dimension of the compartment body in the width direction is b, wherein 250 KW/*m²* ≤ E/(aXb) ≤ 700 KW/*m*².

24. The energy storage apparatus according to claim 23, wherein 450 KW/*m*² ≤ E/(aXb) ≤ 600 KW/*m*².

25. The energy storage apparatus according to any one of claims 1 to 24, wherein the dimension of each of the compartment bodies in the height direction is greater than or equal to one third of the dimension of a standard container in the height direction.

26. The energy storage apparatus according to any one of claims 1 to 25, wherein the standard container is a 20-foot standard container, and the height of the standard container is 2896 mm, 2591 mm, or 2438 mm.

27. The energy storage apparatus according to any one of claims 1 to 26, wherein a plurality of compartment bodies are provided, and the plurality of compartment bodies are arranged along the height direction of the standard container, and each of the plurality of compartment bodies has the energy units accommodated therein; the energy storage apparatus comprises a control module, and the control module comprises a master control module, and the master control module is configured to electrically control the energy units of the plurality of compartment bodies.

28. The energy storage apparatus according to claim 27, comprising a thermal management module configured to manage temperatures of the energy units of the plurality of compartment bodies.

29. The energy storage apparatus according to claim 27 or 28, wherein each of the compartment bodies accommodates the same number of energy units; or the plurality of energy units are connected in parallel and/or in series to form a battery cluster, and each of the compartment bodies accommodates the same number of battery clusters.

30. An energy storage system, comprising a power conversion apparatus and the energy storage apparatus according to any one of claims 1 to 29, wherein the power conversion apparatus is configured to electrically connect a power generation apparatus with the energy storage apparatus.

31. A charging network, comprising a charging pile and the energy storage apparatus according to any one of claims 1 to 29 or the energy storage system according to claim 30, wherein the energy storage apparatus is configured to provide electric energy for the charging pile.
